# EUROPEAN PATENT APPLICATION

(11) **EP 4 492 865 A1**
(43) Date of publication of application: **15.01.2025**
(21) Application number: 24187979.0
(22) Date of filing: 11.07.2024
(51) Int. Cl.: H04W 28/06, H04L 47/32, H04W 80/02

(54) **DATA PROCESSING METHOD AND DEVICE**

(30) Priority: 12.07.2023 KR 20230090499; 20.06.2024 KR 20240080391
(71) Applicant: KT Corporation, Seongnam-si, Gyeonggi-do 13606 (KR)
(72) Inventor: HONG, Sung-pyo, 13606 Seongnam-si Gyeonggi-do (KR)
(74) Representative: Brevalex

(57) **Abstract**

Provided are a method and device for processing data. The method may include receiving higher layer signaling including packet data convergence protocol (PDCP) configuration information for configuring to perform a protocol data unit (PDU) Set-based discard operation, receiving a medium access control (MAC) control element indicating activation of a service data unit (SDU) discard operation based on PDU Set importance, and controlling a PDCP entity to start a PDU Set importance-based discard timer configured in association with the PDCP SDU when the SDU discard operation based on the PDU Set importance is activated, and a PDCP SDU belonging to the PDU Set importance of a preset criterion is received from a higher layer.

## Description

### CROSS-REFERENCE TO RELATED APPLICATION

This application claims priority from Korean Patent Application Nos. 10-2023-0090499, filed on July 12, 2023, and 10-2024-0080391, filed on June 20, 2024, which are hereby incorporated by reference for all purposes as if fully set forth herein.

### BACKGROUND

### Field

The disclosure relates to processing service data in a mobile communication network.

### Description of Related Art

extended reality (XR) and cloud gaming (CG) are broad terms referring to various types of augmented, virtual, and mixed environments in human-machine and human-human communication performed with the help of handheld and wearable terminals. eXtended reality (XR) is used as a broad term encompassing augmented reality (AR), mixed reality (MR), and virtual reality (VR). Cloud gaming represents a use case in which most computations related to gaming are offloaded from a terminal to an edge or remote server. XR applications and cloud computing/gaming typically require high throughput and low latency.

extended reality (XR) and could gaining (CG) requires a mobile communication system for supporting a high-speed data transmission rate and a low-latency service. To that end, there are many discussions about QoS policy control for multi-modal traffic, PDU Set-based QoS processing support, traffic assistance information transfer to support power saving, and XR-specific capacity enhancement functions.

In particular, the capacity enhancement function may enhance the capacity on the wireless interface by appropriately processing packets/PDUs exceeding a delay budget.

However, typical technology of discarding data packets in mobile communication does not reflect the type and characteristics of data and is unable to quickly provide capacity enhancement when data quantities soar.

### BRIEF SUMMARY

The disclosure provides a method and device for effectively discarding UE data in a mobile communication network.

In an aspect, the disclosure may provide method for processing data by a user equipment (UE). The method may include receiving higher layer signaling including packet data convergence protocol (PDCP) configuration information for configuring to perform a protocol data unit (PDU) Set-based discard operation, receiving a medium access control (MAC) control element indicating activation of a service data unit (SDU) discard operation based on PDU Set importance, and controlling a PDCP entity to start a PDU Set importance-based discard timer configured in association with the PDCP SDU when the SDU discard operation based on the PDU Set importance is activated, and a PDCP SDU belonging to the PDU Set importance of a preset criterion is received from a higher layer.

In another aspect, the disclosure may provide a method for controlling UE data processing by a base station. The method may include configuring PDCP configuration information for configuring to perform a PDU Set-based discard operation, transmitting higher layer signaling including the PDCP configuration information to a UE, and transmitting a MAC control element indicating activation of an SDU discard operation based on a PDU Set importance to the UE. The UE may start a PDU Set importance-based discard timer configured in association with the PDCP SDU in the PDCP entity if the PDU Set importance-based SDU discard operation is activated, and the PDCP SDU belonging to the PDU Set importance of a preset criterion is received from the higher layer.

In further another aspect, the disclosure may provide a user equipment (UE) processing data. The UE may include a receiver configured to receive higher layer signaling including packet data convergence protocol (PDCP) configuration information for configuring to perform a protocol data unit (PDU) Set-based discard operation and receiving a medium access control (MAC) control element indicating activation of a service data unit (SDU) discard operation based on PDU Set importance, and a controller configured to control a PDCP entity to start a PDU Set importance-based discard timer configured in association with the PDCP SDU when the SDU discard operation based on the PDU Set importance is activated, and a PDCP SDU belonging to the PDU Set importance of a preset criterion is received from a higher layer.

In still another aspect, the disclosure may provide a base station controlling UE data processing. The base station may include a controller configured to configure PDCP configuration information for configuring to perform a PDU Set-based discard operation and a transmitter configured to transmit higher layer signaling including the PDCP configuration information to a UE and transmit a MAC control element indicating activation of an SDU discard operation based on a PDU Set importance to the UE. The UE may start a PDU Set importance-based discard timer configured in association with the PDCP SDU in the PDCP entity if the PDU Set importance-based SDU discard operation is activated, and the PDCP SDU belonging to the PDU Set importance of a preset criterion is received from the higher layer.

According to the embodiments, UE data may be effectively discarded in a mobile communication network.

### DESCRIPTION OF DRAWINGS

The above and other aspects, features, and advantages of the disclosure will be more apparent from the following detailed description taken in conjunction with the accompanying drawings, in which:
FIG. 1 is a view schematically illustrating an NR wireless communication system in accordance with embodiments of the disclosure;
FIG. 2 is a view schematically illustrating a frame structure in an NR system in accordance with embodiments of the disclosure;
FIG. 3 is a view for explaining resource grids supported by a radio access technology in accordance with embodiments of the disclosure;
FIG. 4 is a view for explaining bandwidth parts supported by a radio access technology in accordance with embodiments of the disclosure;
FIG. 5 is a view illustrating an example of a synchronization signal block in a radio access technology in accordance with embodiments of the disclosure;
FIG. 6 is a signal diagram for explaining a random access procedure in a radio access technology in accordance with embodiments of the disclosure;
FIG. 7 is a view for explaining CORESET;
FIG. 8 is a flowchart illustrating operations of a UE according to an embodiment;
FIG. 9 is a flowchart illustrating operations of a base station according to an embodiment;
FIG. 10 is a block diagram illustrating a UE according to an embodiment; and
FIG. 11 is a block diagram illustrating a base station according to an embodiment.

### DETAILED DESCRIPTION

Hereinafter, some embodiments of the disclosure will be described in detail with reference to the accompanying illustrative drawings. In the drawings, like reference numerals are used to denote like elements throughout the drawings, even if they are shown on different drawings. Further, in the following description of the disclosure, a detailed description of known functions and configurations incorporated herein will be omitted when it may make the subject matter of the disclosure rather unclear. When the expression "include", "have", "comprise", or the like as mentioned herein is used, any other part may be added unless the expression "only" is used. When an element is expressed in the singular, the element may cover the plural form unless a special mention is explicitly made of the element.

In addition, terms, such as first, second, A, B, (A), (B) or the like may be used herein when describing components of the disclosure. Each of these terminologies is not used to define an essence, order or sequence of a corresponding component but used merely to distinguish the corresponding component from other component(s).

In describing the positional relationship between components, if two or more components are described as being "connected", "combined", or "coupled" to each other, it should be understood that two or more components may be directly "connected", "combined", or "coupled" to each other, and that two or more components may be "connected", "combined", or "coupled" to each other with another component "interposed" therebetween. In this case, another component may be included in at least one of the two or more components that are "connected", "combined", or "coupled" to each other.

In the description of a sequence of operating methods or manufacturing methods, for example, the expressions using "after", "subsequent to", "next", "before", and the like may also encompass the case in which operations or processes are performed discontinuously unless "immediately" or "directly" is used in the expression.

Numerical values for components or information corresponding thereto (e.g., levels or the like), which are mentioned herein, may be interpreted as including an error range caused by various factors (e.g., process factors, internal or external impacts, noise, etc.) even if an explicit description thereof is not provided.

The wireless communication system in the present specification refers to a system for providing various communication services, such as a voice service and a data service, using radio resources. The wireless communication system may include a user equipment (UE), a base station, a core network, and the like.

Embodiments disclosed below may be applied to a wireless communication system using various radio access technologies. For example, the embodiments may be applied to various radio access technologies such as code division multiple access (CDMA), frequency division multiple access (FDMA), time division multiple access (TDMA), orthogonal frequency division multiple access (OFDMA), single-carrier frequency division multiple access (SC-FDMA), non-orthogonal multiple access (NOMA), or the like. In addition, the radio access technology may refer to respective generation communication technologies established by various communication organizations, such as 3GPP, 3GPP2, Wi-Fi, Bluetooth, IEEE, ITU, or the like, as well as a specific access technology. For example, CDMA may be implemented as a wireless technology such as universal terrestrial radio access (UTRA) or CDMA2000. TDMA may be implemented as a wireless technology such as global system for mobile communications (GSM)/general packet radio service (GPRS)/enhanced data rates for GSM evolution (EDGE). OFDMA may be implemented as a wireless technology such as IEEE (Institute of Electrical and Electronics Engineers) 802.11 (Wi-Fi), IEEE 802.16 (WiMAX), IEEE 802-20, evolved UTRA (E-UTRA), and the like. IEEE 802.16m is evolution of IEEE 802.16e, which provides backward compatibility with systems based on IEEE 802.16e. UTRA is a part of a universal mobile telecommunications system (UMTS). 3GPP (3rd-generation partnership project) LTE (long-term evolution) is a part of E-UMTS (evolved UMTS) using evolved-UMTS terrestrial radio access (E-UTRA), which adopts OFDMA in a downlink and SC-FDMA in an uplink. As described above, the embodiments may be applied to radio access technologies that have been launched or commercialized, and may be applied to radio access technologies that are being developed or will be developed in the future.

The UE used in the specification must be interpreted as a broad meaning that indicates a device including a wireless communication module that communicates with a base station in a wireless communication system. For example, the UE includes user equipment (UE) in WCDMA, LTE, NR, HSPA, IMT-2020 (5G or New Radio), and the like, a mobile station in GSM, a user terminal (UT), a subscriber station (SS), a wireless device, and the like. In addition, the UE may be a portable user device, such as a smart phone, or may be a vehicle, a device including a wireless communication module in the vehicle, and the like in a V2X communication system according to the usage type thereof. In the case of a machine-type communication (MTC) system, the UE may refer to an MTC terminal, an M2M terminal, or a URLLC terminal, which employs a communication module capable of performing machine-type communication.

A base station or a cell in the present specification refers to an end that communicates with a UE through a network and encompasses various coverage regions such as a Node-B, an evolved Node-B (eNB), a gNode-B, a low-power node (LPN), a sector, a site, various types of antennas, a base transceiver system (BTS), an access point, a point (e.g., a transmission point, a reception point, or a transmission/reception point), a relay node, a megacell, a macrocell, a microcell, a picocell, a femtocell, a remote radio head (RRH), a radio unit (RU), a small cell, and the like. In addition, the cell may be used as a meaning including a bandwidth part (BWP) in the frequency domain. For example, the serving cell may refer to an active BWP of a UE.

The various cells listed above are provided with a base station controlling one or more cells, and the base station may be interpreted as two meanings. The base station may be 1) a device for providing a megacell, a macrocell, a microcell, a picocell, a femtocell, or a small cell in connection with a wireless region, or the base station may be 2) a wireless region itself. In the above description 1), the base station may be the devices controlled by the same entity and providing predetermined wireless regions or all devices interacting with each other and cooperatively configuring a wireless region. For example, the base station may be a point, a transmission/reception point, a transmission point, a reception point, and the like according to the configuration method of the wireless region. In the above description 2), the base station may be the wireless region in which a user equipment (UE) may be enabled to transmit data to and receive data from the other UE or a neighboring base station.

In this specification, the cell may refer to coverage of a signal transmitted from a transmission/reception point, a component carrier having coverage of a signal transmitted from a transmission/reception point (or a transmission point), or a transmission/reception point itself.

An uplink (UL) refers to a scheme of transmitting data from a UE to a base station, and a downlink (DL) refers to a scheme of transmitting data from a base station to a UE. The downlink may mean communication or communication paths from multiple transmission/reception points to a UE, and the uplink may mean communication or communication paths from a UE to multiple transmission/reception points. In the downlink, a transmitter may be a part of the multiple transmission/reception points, and a receiver may be a part of the UE. In addition, in the uplink, the transmitter may be a part of the UE, and the receiver may be a part of the multiple transmission/reception points.

The uplink and downlink transmit and receive control information over a control channel, such as a physical downlink control channel (PDCCH) and a physical uplink control channel (PUCCH). The uplink and downlink transmit and receive data over a data channel such as a physical downlink shared channel (PDSCH) and a physical uplink shared channel (PUSCH). Hereinafter, the transmission and reception of a signal over a channel, such as PUCCH, PUSCH, PDCCH, PDSCH, or the like, may be expressed as "PUCCH, PUSCH, PDCCH, PDSCH, or the like is transmitted and received".

For the sake of clarity, the following description will focus on 3GPP LTE/LTE-A/NR (New Radio) communication systems, but technical features of the disclosure are not limited to the corresponding communication systems.

The 3GPP has been developing a 5G (5th-Generation) communication technology in order to meet the requirements of a next-generation radio access technology of ITU-R after studying 4G (4th-generation) communication technology. Specifically, 3GPP is developing, as a 5G communication technology, LTE-A pro by improving the LTE-Advanced technology so as to conform to the requirements of ITU-R and a new NR communication technology that is totally different from 4G communication technology. LTE-A pro and NR all refer to the 5G communication technology. Hereinafter, the 5G communication technology will be described on the basis of NR unless a specific communication technology is specified.

Various operating scenarios have been defined in NR in consideration of satellites, automobiles, new verticals, and the like in the typical 4G LTE scenarios so as to support an enhanced mobile broadband (eMBB) scenario in terms of services, a massive machine-type communication (mMTC) scenario in which UEs spread over a broad region at a high UE density, thereby requiring low data rates and asynchronous connections, and an ultra-reliability and low-latency (URLLC) scenario that requires high responsiveness and reliability and supports high-speed mobility.

In order to satisfy such scenarios, NR introduces a wireless communication system employing a new waveform and frame structure technology, a low-latency technology, a super-high frequency band (mmWave) support technology, and a forward compatible provision technology. In particular, the NR system has various technological changes in terms of flexibility in order to provide forward compatibility. The primary technical features of NR will be described below with reference to the drawings.

### <Overview of NR System>

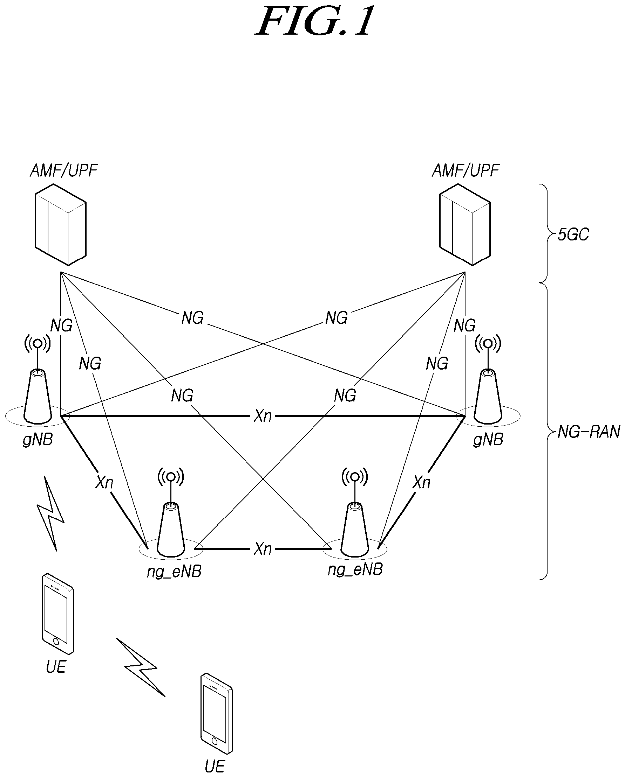

FIG. 1 is a view schematically illustrating an NR system.

Referring to FIG. 1, the NR system is divided into a 5G core network (5GC) and an NG-RAN part. The NG-RAN includes gNBs and ng-eNBs providing user plane (SDAP/PDCP/RLC/MAC/PHY) and user equipment (UE) control plane (RRC) protocol ends. The gNBs or the gNB and the ng-eNB are connected to each other through Xn interfaces. The gNB and the ng-eNB are connected to the 5GC through NG interfaces, respectively. The 5GC may be configured to include an access and mobility management function (AMF) for managing a control plane, such as a UE connection and mobility control function, and a user plane function (UPF) controlling user data. NR supports both frequency bands below 6 GHz (frequency range 1 FR1 FR1) and frequency bands equal to or greater than 6 GHz (frequency range 2 FR2 FR2).

The gNB denotes a base station that provides a UE with an NR user plane and control plane protocol end. The ng-eNB denotes a base station that provides a UE with an E-UTRA user plane and control plane protocol end. The base station described in the present specification should be understood as encompassing the gNB and the ng-eNB. However, the base station may be also used to refer to the gNB or the ng-eNB separately from each other, as necessary.

### <NR Waveform, Numerology, and Frame Structure>

NR uses a CP-OFDM waveform using a cyclic prefix for downlink transmission and uses CP-OFDM or DFT-s-OFDM for uplink transmission. OFDM technology is easy to combine with a multiple-input multiple-output (MIMO) scheme and allows a low-complexity receiver to be used with high frequency efficiency.

Since the three scenarios described above have different requirements for data rates, delay rates, coverage, and the like from each other in NR, it is necessary to efficiently satisfy the requirements for each scenario over frequency bands constituting the NR system. To this end, a technique for efficiently multiplexing radio resources based on a plurality of different numerologies has been proposed.

Specifically, the NR transmission numerology is determined on the basis of subcarrier spacing and a cyclic prefix (CP). As shown in Table 1 below, "µ" is used as an exponential value of 2 so as to be changed exponentially on the basis of 15 kHz.

**[Table 1]**

| µ | Subcarrier spacing | Cyclic prefix | Supported for data | Supported for synch |
|---|---|---|---|---|
| 0 | 15 | normal | Yes | Yes |
| 1 | 30 | normal | Yes | Yes |
| 2 | 60 | Normal, Extended | Yes | No |
| 3 | 120 | normal | Yes | Yes |
| 4 | 240 | normal | No | Yes |

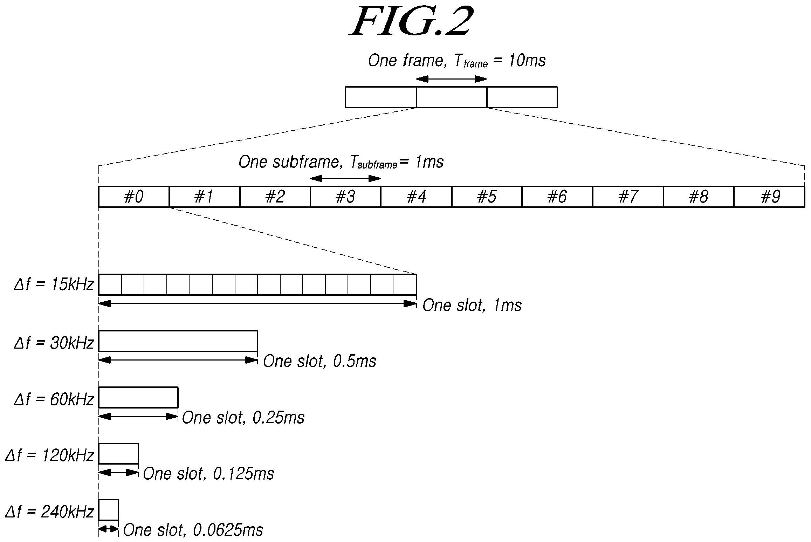

As shown in Table 1 above, NR may have five types of numerologies according to subcarrier spacing. This is different from LTE, which is one of the 4G-communication technologies, in which the subcarrier spacing is fixed to 15 kHz. Specifically, in NR, subcarrier spacing used for data transmission is 15, 30, 60, or 120 kHz, and subcarrier spacing used for synchronization signal transmission is 15, 30, 120, or 240 kHz. In addition, an extended CP is applied only to the subcarrier spacing of 60 kHz. A frame that includes 10 subframes each having the same length of 1 ms and has a length of 10 ms is defined in the frame structure in NR. One frame may be divided into half frames of 5 ms, and each half frame includes 5 subframes. In the case of a subcarrier spacing of 15 kHz, one subframe includes one slot, and each slot includes 14 OFDM symbols. FIG. 2 is a view for explaining a frame structure in an NR system.

Referring to FIG. 2, a slot includes 14 OFDM symbols, which are fixed, in the case of a normal CP, but the length of the slot in the time domain may be varied depending on subcarrier spacing. For example, in the case of a numerology having a subcarrier spacing of 15 kHz, the slot is configured to have the same length of 1 ms as that of the subframe. On the other hand, in the case of a numerology having a subcarrier spacing of 30 kHz, the slot includes 14 OFDM symbols, but one subframe may include two slots each having a length of 0.5 ms. That is, the subframe and the frame may be defined using a fixed time length, and the slot may be defined as the number of symbols such that the time length thereof is varied depending on the subcarrier spacing.

NR defines a basic unit of scheduling as a slot and also introduces a minislot (or a subslot or a non-slot-based schedule) in order to reduce a transmission delay of a radio section. If wide subcarrier spacing is used, the length of one slot is shortened in inverse proportion thereto, thereby reducing a transmission delay in the radio section. A minislot (or subslot) is intended to efficiently support URLLC scenarios, and the minislot may be scheduled in 2, 4, or 7 symbol units.

In addition, unlike LTE, NR defines uplink and downlink resource allocation as a symbol level in one slot. In order to reduce a HARQ delay, the slot structure capable of directly transmitting HARQ ACK/NACK in a transmission slot has been defined. Such a slot structure is referred to as a "self-contained structure", which will be described.

NR was designed to support a total of 256 slot formats, and 62 slot formats thereof are used in 3GPP Rel-15. In addition, NR supports a common frame structure constituting an FDD or TDD frame through combinations of various slots. For example, NR supports i) a slot structure in which all symbols of a slot are configured for a downlink, ii) a slot structure in which all symbols are configured for an uplink, and iii) a slot structure in which downlink symbols and uplink symbols are mixed. In addition, NR supports data transmission that is scheduled to be distributed to one or more slots. Accordingly, the base station may inform the UE of whether the slot is a downlink slot, an uplink slot, or a flexible slot using a slot format indicator (SFI). The base station may inform a slot format by instructing, using the SFI, the index of a table configured through UE-specific RRC signaling. Further, the base station may dynamically instruct the slot format through downlink control information (DCI) or may statically or quasi-statically instruct the same through RRC signaling.

### <Physical Resources of NR>

With regard to physical resources in NR, antenna ports, resource grids, resource elements, resource blocks, bandwidth parts, and the like are taken into consideration.

The antenna port is defined to infer a channel carrying a symbol on an antenna port from the other channel carrying another symbol on the same antenna port. If large-scale properties of a channel carrying a symbol on an antenna port can be inferred from the other channel carrying a symbol on another antenna port, the two antenna ports may have a quasi-co-located or quasi-co-location (QC/QCL) relationship. The large-scale properties include at least one of delay spread, Doppler spread, a frequency shift, an average received power, and a received timing.

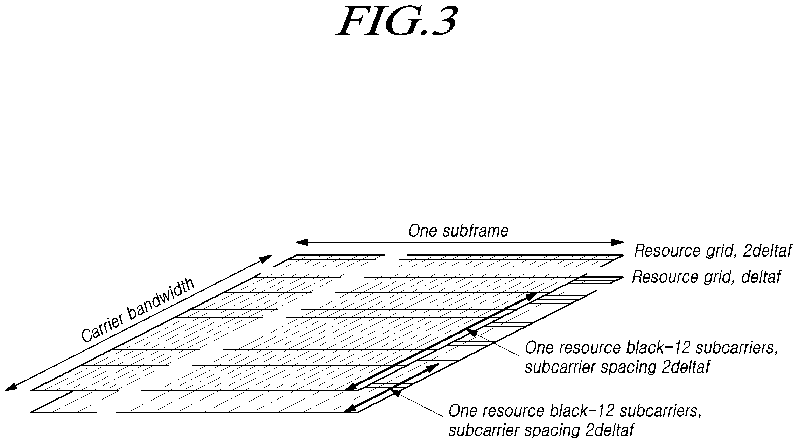

FIG. 3 illustrates resource grids supported by a radio access technology in accordance with embodiments of the disclosure.

Referring to FIG. 3, resource grids may exist according to respective numerologies because NR supports a plurality of numerologies in the same carrier. In addition, the resource grids may exist depending on antenna ports, subcarrier spacing, and transmission directions.

A resource block includes 12 subcarriers and is defined only in the frequency domain. In addition, a resource element includes one OFDM symbol and one subcarrier. Therefore, as shown in FIG. 3, the size of one resource block may be varied according to the subcarrier spacing. Further, "Point A" that acts as a common reference point for the resource block grids, a common resource block, and a virtual resource block are defined in NR.

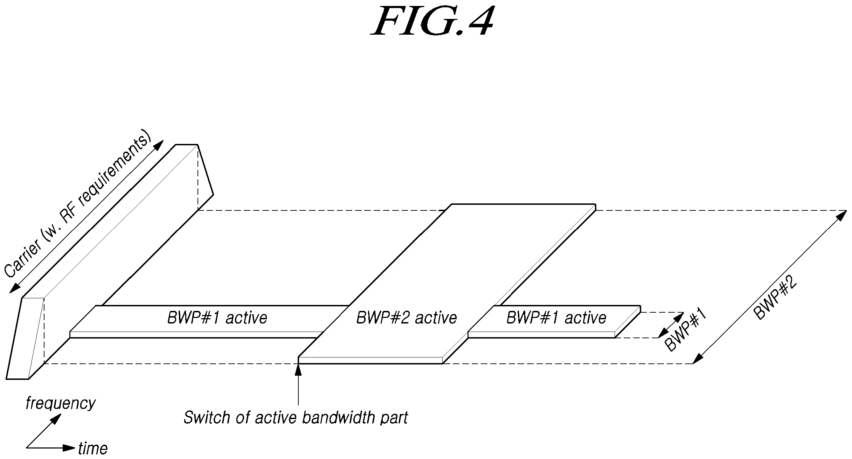

FIG. 4 illustrates bandwidth parts supported by a radio access technology in accordance with embodiments of the disclosure.

Unlike LTE in which the carrier bandwidth is fixed to 20 MHz, the maximum carrier bandwidth is configured as 50 MHz to 400 MHz depending on the subcarrier spacing in NR. Therefore, it is not assumed that all UEs use the entire carrier bandwidth. Accordingly, as shown in FIG. 4, bandwidth parts (BWPs) may be specified within the carrier bandwidth in NR so that the UE may use the same. In addition, the bandwidth part may be associated with one numerology, may include a subset of consecutive common resource blocks, and may be activated dynamically over time. The UE has up to four bandwidth parts in each of the uplink and the downlink. The UE transmits and receives data using an activated bandwidth part during a given time.

In the case of a paired spectrum, uplink and downlink bandwidth parts are configured independently. In the case of an unpaired spectrum, in order to prevent unnecessary frequency re-tuning between a downlink operation and an uplink operation, the downlink bandwidth part and the uplink bandwidth part are configured in pairs to share a center frequency.

### <Initial Access in NR>

In NR, a UE performs a cell search and a random access procedure in order to access and communicates with a base station.

The cell search is a procedure of the UE for synchronizing with a cell of a corresponding base station using a synchronization signal block (SSB) transmitted from the base station and acquiring a physical-layer cell ID and system information.

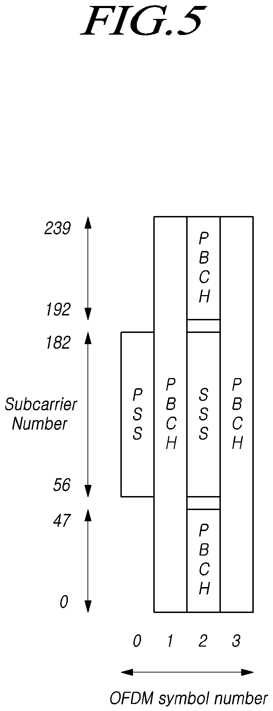

FIG. 5 illustrates an example of a synchronization signal block in a radio access technology in accordance with embodiments of the disclosure.

Referring to FIG. 5, the SSB includes a primary synchronization signal (PSS) and a secondary synchronization signal (SSS), which occupy one symbol and 127 subcarriers, and PBCHs spanning three OFDM symbols and 240 subcarriers.

The UE monitors the SSB in the time and frequency domain, thereby receiving the SSB.

The SSB may be transmitted up to 64 times for 5 ms. A plurality of SSBs are transmitted by different transmission beams within a time of 5 ms, and the UE performs detection on the assumption that the SSB is transmitted every 20 ms based on a specific beam used for transmission. The number of beams that may be used for SSB transmission within 5 ms may be increased as the frequency band is increased. For example, up to 4 SSB beams may be transmitted at a frequency band of 3 GHz or less, and up to 8 SSB beams may be transmitted at a frequency band of 3 to 6 GHz. In addition, the SSBs may be transmitted using up to 64 different beams at a frequency band of 6 GHz or more.

One slot includes two SSBs, and a start symbol and the number of repetitions in the slot are determined according to subcarrier spacing as follows.

Unlike the SS in the typical LTE system, the SSB is not transmitted at the center frequency of a carrier bandwidth. That is, the SSB may also be transmitted at the frequency other than the center of the system band, and a plurality of SSBs may be transmitted in the frequency domain in the case of supporting a broadband operation. Accordingly, the UE monitors the SSB using a synchronization raster, which is a candidate frequency position for monitoring the SSB. A carrier raster and a synchronization raster, which are the center frequency position information of the channel for the initial connection, were newly defined in NR, and the synchronization raster may support a fast SSB search of the UE because the frequency spacing thereof is configured to be wider than that of the carrier raster.

The UE may acquire an MIB over the PBCH of the SSB. The MIB (master information block) includes minimum information for the UE to receive remaining minimum system information (RMSI) broadcast by the network. In addition, the PBCH may include information on the position of the first DM-RS symbol in the time domain, information for the UE to monitor SIB1 (e.g., SIB1 numerology information, information related to SIB1 CORESET, search space information, PDCCH-related parameter information, etc.), offset information between the common resource block and the SSB (the position of an absolute SSB in the carrier is transmitted via SIB 1), and the like. The SIB 1 numerology information is also applied to some messages used in the random access procedure for the UE to access the base station after completing the cell search procedure. For example, the numerology information of SIB 1 may be applied to at least one of the messages 1 to 4 for the random access procedure.

The above-mentioned RMSI may mean SIB1 (system information block 1), and SIB1 is broadcast periodically (e.g., 160 ms) in the cell. SIB1 includes information necessary for the UE to perform the initial random access procedure, and SIB 1 is periodically transmitted over a PDSCH. In order to receive SIB1, the UE must receive numerology information used for the SIB1 transmission and the CORESET (control resource set) information used for scheduling of SIB1 over a PBCH. The UE identifies scheduling information for SIB1 using SI-RNTI in the CORESET. The UE acquires SIB1 on the PDSCH according to scheduling information. The remaining SIBs other than SIB1 may be periodically transmitted, or the remaining SIBs may be transmitted according to the request of the UE.

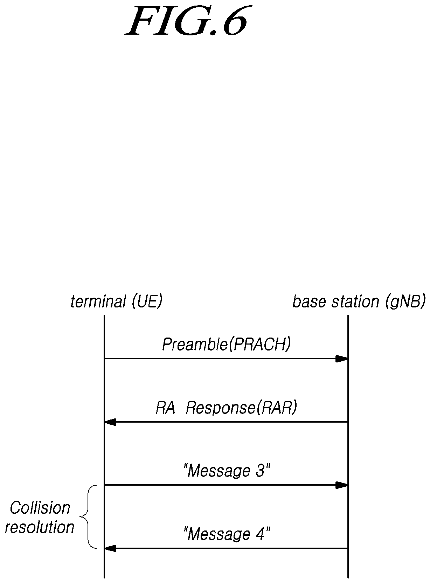

FIG. 6 is a view for explaining a random access procedure in a radio access technology.

Referring to FIG. 6, if a cell search is completed, the UE transmits a random access preamble for random access to the base station. The random access preamble is transmitted over a PRACH. Specifically, the random access preamble is periodically transmitted to the base station over the PRACH that includes consecutive radio resources in a specific slot repeated. In general, a contention-based random access procedure is performed when the UE makes initial access to a cell, and a non-contention-based random access procedure is performed when the UE performs random access for beam failure recovery (BFR).

The UE receives a random access response to the transmitted random access preamble. The random access response may include a random access preamble identifier (ID), UL Grant (uplink radio resource), a temporary C-RNTI (temporary cell-radio network temporary identifier), and a TAC (time alignment command). Since one random access response may include random access response information for one or more UEs, the random access preamble identifier may be included in order to indicate the UE for which the included UL Grant, temporary C-RNTI, and TAC are valid. The random access preamble identifier may be an identifier of the random access preamble received by the base station. The TAC may be included as information for the UE to adjust uplink synchronization. The random access response may be indicated by a random access identifier on the PDCCH, i.e., a random access-radio network temporary identifier (RA-RNTI).

Upon receiving a valid random access response, the UE processes information included in the random access response and performs scheduled transmission to the base station. For example, the UE applies the TAC and stores the temporary C-RNTI. In addition, the UE transmits, to the base station, data stored in the buffer of the UE or newly generated data using the UL Grant. In this case, information for identifying the UE must be included in the data.

Lastly, the UE receives a downlink message to resolve the contention.

### <NR CORESET>

The downlink control channel in NR is transmitted in a CORESET (control resource set) having a length of 1 to 3 symbols, and the downlink control channel transmits uplink/downlink scheduling information, an SFI (slot format index), TPC (transmit power control) information, and the like.

As described above, NR has introduced the concept of CORESET in order to secure the flexibility of a system. The CORESET (control resource set) refers to a time-frequency resource for a downlink control signal. The UE may decode a control channel candidate using one or more search spaces in the CORESET time-frequency resource. CORESET-specific QCL (quasi-colocation) assumption is configured and is used for the purpose of providing information on the characteristics of analogue beam directions, as well as delay spread, Doppler spread, Doppler shift, and an average delay, which are the characteristics assumed by existing QCL.

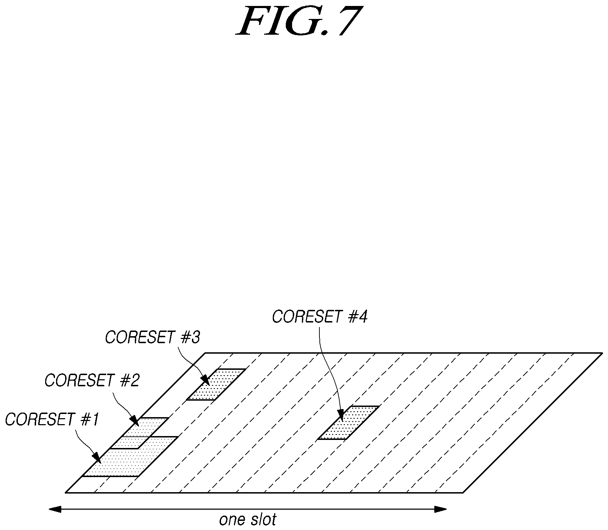

FIG. 7 illustrates CORESET.

Referring to FIG. 7, CORESETs may exist in various forms within a carrier bandwidth in a single slot, and the CORESET may include a maximum of 3 OFDM symbols in the time domain. In addition, the CORESET is defined as a multiple of six resource blocks up to the carrier bandwidth in the frequency domain.

A first CORESET, as a portion of the initial bandwidth part, is designated (e.g., instructed, assigned) through an MIB in order to receive additional configuration information and system information from a network. After establishing a connection with the base station, the UE may receive and configure one or more pieces of CORESET information through RRC signaling.

In this specification, a frequency, a frame, a subframe, a resource, a resource block, a region, a band, a subband, a control channel, a data channel, a synchronization signal, various reference signals, various signals, or various messages in relation to NR (New Radio) may be interpreted as meanings used at present or in the past or as various meanings to be used in the future.

extended reality (XR) is a broad term referring to various types of augmented, virtual, and mixed environments in human-machine and human-human communication performed with the help of handheld and wearable terminals. eXtended reality (XR) is used as a broad term encompassing augmented reality (AR), mixed reality (MR), and virtual reality (VR). XR and interactive media application services, such as cloud games and tactile/multi-modal communication services, require a high-speed data transmission rate and low-latency communication.

3GPP is standardizing Rel-18 to support a high-speed data transmission rate and low-latency services such as XR and interactive media application services. The standardization discusses QoS policy control for multi-modal traffic, PDU Set-based QoS processing support, traffic assistance information delivery to support power saving, and XR-specific capacity enhancement functions to effectively support XR and media services in mobile communication networks.

In particular, the XR-specific capacity enhancement function requires a function for enhancing the capacity on the wireless interface by discarding packets/PDUs exceeding the corresponding delay budget. Typically, PDU Set discard is modeled using a PDCP discard timer. In this case, it is not possible to appropriately deal with data deluge.

Therefore, a need arises for a technology for appropriately processing data when a data deluge occurs.

No detailed procedure and operation method has been introduced for discarding the data of the UE transmitting/receiving XR and media application service data to enhance the capacity of the mobile communication network.

In this regard, a detailed procedure, operation method, and device are introduced for effectively discarding UE data over a mobile communication network where application service data is being transmitted/received.

Hereinafter, a control method according to an embodiment will be described based on 5GS/NR technology. However, the embodiments are not limited to 5GS/NR technology. This is for convenience of description. The embodiments may be applied to any system/radio access technology (e.g., LTE, 6G). Embodiments described in the disclosure include information elements specified in the NR/5GS standards (e.g., TS 38.321 as a MAC standard, TS 38.331 as an NR RRC standard, and TS 23.501 as a system structure standard) and the content of operations. Although the disclosure does not contain the content of the UE operation related to the definitions for the corresponding information elements, the corresponding content set forth in the standards may be incorporated in the present embodiments to aid understanding.

Any function described below is defined as an individual-UE capability (UE radio capability or UE core network capability) and may be transmitted by the UE to the base station/core network entity (e.g., AMF/SMF) through corresponding signaling. Alternatively, arbitrary functions may be combined/merged to be defined as the corresponding UE capability, and transmitted to the base station/core network entity through corresponding signaling by the UE.

The base station may transmit/indicate information indicating, allowing, supporting, or configuring a corresponding function, function combination for any function, or any function combination, described below, to the UE through a higher layer message (e.g., an RRC message). For example, it may be indicated to the UE before or simultaneously with configuring or applying the corresponding function/function combination. The radio resource control (RRC) message may be broadcast through system information. Or it may be indicated to the UE through a dedicated RRC message.

The base station may transmit or indicate information for limiting any function described below to the UE through an RRC message. For example, the prohibit timer of the corresponding function may be indicated (or transmitted, provided). The corresponding prohibit timer may be started or restarted before or when the corresponding function is initiated. While the corresponding timer is running, the UE may be limited not to initiate or to execute the corresponding function.

The functions described below may be performed individually and independently. Further, functions and embodiments described below may be arbitrarily combined or merged and it is obvious that they are also included in the scope of the disclosure. For example, one or more functions may be simultaneously applied, and embodiments of each section may be implemented in any combination.

Meanwhile, any information about the XR application in the disclosure may be traffic characteristic information (e.g., any statistics/statistical quantity such as expected value/average, deviation, standard deviation minimum, maximum, etc.) statistically/empirically obtained/calculated/derived by the UE/network. Therefore, any information included herein may indicate one or more of the average (e.g., expected value)/minimum/maximum/standard deviation values. For example, if the information 'update rate' is included, it may mean an average (e.g., expected value)/minimum/maximum/standard deviation update rate. However, the embodiments are not limited thereto. This is only for convenience of description, and all of the information in the disclosure may be used as statistical information. Alternatively, it may be information preconfigured in the UE/network or provisioned through OAM/application server/application function/UDM.

3GPP SA2 WG defined PDU Set, PDU Set QoS parameter, and PDU Set information to effectively recognize and process XR application data in Rel-18. The PDU Set refers to one or more PDUs (e.g., one or more PDUs carrying the payload of one unit of information generated at the application level (e.g., frame(s) or video slice(s) etc. for XR Services)). PDU Set Integrated Handling Information (PSIHI) which is one of the PDU Set QoS parameters represents whether all PDUs of the PDU Set are needed for the usage of PDU Set by application layer. The PDU Set Importance (PSI) indicates information for identifying relative importance compared to other PDU sets in one QoS flow.

These terms are for convenience of description and may be changed to any other name.

The PCF may determine the PDU Set QoS parameter based on information provided by the application function AF and/or the local configuration. The PDU Set QoS parameter, as part of the PCC rule, is sent to the SMF. The SMF sends it, as part of the QoS profile, to the base station. If the base station receives and supports the corresponding parameter, the base station may use the same for PDU Set-based QoS processing.

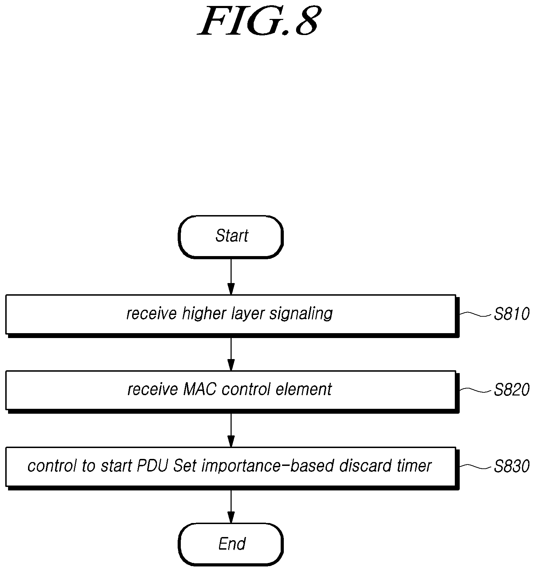

FIG. 8 is a flowchart describing operations of a UE according to an embodiment.

Referring to FIG. 8, a method for processing data by the UE may include receiving higher layer signaling including PDCP configuration information for configuring to perform a PDU set-based discard operation (S810).

According to an embodiment, the UE may receive PDCP configuration information through an RRC message. For example, the RRC message may be an RRC reconfiguration message. The UE may receive PDCP configuration information through higher layer signaling periodically or according to the occurrence of a specific event.

According to an embodiment, the PDCP configuration information may include i) information that indicates the execution of a PDU Set-based discard operation and ii) information about the timer for discarding based on the importance of the PDU Set (e.g., PDU Set importance-based discard timer information).

According to an embodiment, the information that indicates the execution of the PDU Set-based discard operation may be included as an information element of PDCP configuration information. For example, the information that indicates the execution of the PDU Set-based discard operation may be included as a pdu-SetDiscard information element. If the corresponding information element is set to true, the UE may identify that the execution of the PDU Set-based discard operation is indicated for the corresponding PDCP entity. As another example, the information about the timer for discarding based on the importance of the PDU Set (e.g., PDU Set importance-based discard timer information) may be included as an information element distinguished from the conventional PDCP discard timer information. The PDU Set importance-based discard timer information may be included as a discardTimerForLowImportance information element. For example, the PDU set importance-based discard timer information may include a timer value applied when the UE performs a service data unit (SDU) discard operation based on the PDU set importance.

According to another embodiment, the PDU Set importance-based discard timer is indicated through an information element distinguished from the PDCP discard timer. The value of the PDU Set importance-based discard timer may be set from among values equal to or larger than 0 and smaller than the value of the PDCP discard timer. For example, the value of the PDU Set importance-based discard timer may be set to 0. The value of the PDCP discard timer may not be set to 0. Further, the value of the PDU Set importance-based discard timer is set to a value smaller than the value of the PDCP discard timer. Since the value of the timer is set in units of time, a small value means a value representing a short time.

The SDU discard operation based on the PDU Set importance is deactivated after receiving the RRC reconfiguration message. For example, when the RRC reconfiguration message is received, the UE may configure the SDU discard operation based on the PDU Set importance to be in an inactive state. Specifically, when receiving a reconfiguration message (e.g., reconfigurationwithsync) including a handover command according to the movement of the UE, it may be considered that the SDU discard operation function based on the PDU Set importance is disabled/deactivated.

The method for processing data by the UE may include receiving a MAC control element indicating activation of a service data unit (SDU) display operation based on the PDU Set importance (e.g., the importance of the PDU Set) (S820).

For example, the SDU discard operation based on PDU Set importance refers to the operation of dividing and applying the discard operation of the PDCP SDU using PDU Set importance information configured in the PDU Set. For example, when PDU Set importance is set to be low, it refers to an operation of performing a discard operation using a PDU Set importance-based discard timer rather than a PDCP discard timer. As the value of the PDU Set importance-based discard timer is set to be smaller than the value of the PDCP discard timer, the PDCP SDU having the lower importance may be discarded more quickly, thereby reducing the load of the mobile communication system in terms of securing the capacity.

The UE may be instructed to switch to the active state for the service data unit (SDU) discard operation based on the PDU Set importance of the inactive state through the MAC CE. Alternatively, the UE may be instructed to switch to the inactive state for the service data unit (SDU) discard operation based on the PDU Set importance of the active state through the MAC CE.

According to an embodiment, the MAC control element may include a field for indicating activation or deactivation of the SDU discard operation based on PDU Set importance. The MAC control element may indicate activation or deactivation of the SDU discard operation based on the PDU Set importance for each DRB.

The MAC control element for indicating activation or deactivation of the SDU discard operation based on the PDU Set importance may be a newly defined MAC control element rather than a typical MAC control element.

The method for processing data by the UE may include controlling to start a PDU Set importance-based discard timer configured in association with the PDCP SDU in the PDCP entity if the PDU Set importance-based SDU discard operation is activated, and the PDCP SDU belonging to the PDU Set importance of a preset criterion is received from the higher layer (S830).

According to an embodiment, the UE may receive the MAC control element to activate or deactivate the SDU discard operation based on the PDU Set importance. When the SDU discard operation based on the PDU Set importance is activated, the UE may identify the PDU Set importance for the PDCP SDU transferred from the higher layer. If the PDCP SDU belongs to a low PDU Set importance, a PDU Set importance-based discard timer configured in association with the PDCP SDU may be started.

According to an embodiment, PDU Set importance may be divided according to a preset criterion. For example, the PDU Set importance may be divided into two steps: high and low. As another example, PDU Set importance may be divided into N levels. As further another example, PDU Set importance may be set in various ways, and there is no limitation thereto.

When the PDCP SDU belonging to the low PDU Set importance is received, the PDCP entity starts by associating the PDU Set importance-based discard timer rather than the PDCP discard timer. In other words, the UE may divide and apply a timer for discarding the PDU according to PDU Set importance information.

According to an embodiment, the controlling step may, when the PDU Set importance-based discard timer expires, control the PDCP entity to discard all PDCP SDUs included in the PDU Set to which the PDCP SDU belongs, together with the PDCP data PDU. For example, the PDCP entity may start a PDU Set importance-based discard timer in association with the PDCP SDU belonging to the low PDU Set importance, and when the PDU Set importance-based discard timer expires, the PDCP entity may discard all of the PDCP SDUs included in the PDU Set to which the PDCP SDU belongs.

According to another embodiment, the controlling step may, when the PDCP entity receives the PDCP SDU to be included in the PDU Set to which the PDCP SDU belongs from the higher layer, control the PDCP entity to discard the received PDCP SDU as well. For example, the PDCP entity may discard all of the PDCP SDUs of the PDU Set to which the PDCP SDU belongs as the PDU Set importance-based discard timer expires and may also discard PDCP SDUs that are divided and received (successively) from the higher layer to be included in the corresponding PDU Set.

According to further another embodiment, the controlling step may, when the SDU discard operation based on the PDU Set importance is in an inactive state or the PDU Set importance-based discard timer is not configured, control to initiate the PDCP discard timer associated with the PDCP SDU. For example, when the PDU Set importance-based discard timer is configured in the UE and the SDU discard operation based on PDU Set importance is activated, the UE starts the PDU Set importance-based discard timer for the PDCP SDU. As another example, when the SDU discard operation based on the PDU Set importance is deactivated, the UE starts the typical PDCP discard timer in association with the PDCP SDU. As further another example, even when the PDU Set importance-based discard timer is not configured in the UE even when the PDU Set importance-based discard operation is activated, the UE starts the conventional PDCP discard timer in association with the PDCP SDU.

Through the above-described operations according to the embodiments, the UE may divide the PDCP SDU for the uplink data using the PDU Set importance information and may apply another discard timer to secure the capacity of the mobile communication system. In other words, it is possible to quickly address data congestion when sharp data deluge occurs by operating the PDCP SDU belonging to a low-importance PDU Set in association with a discard timer set to a smaller value. Further, it is possible to provide a high throughput of the mobile communication system by quickly smoothing capacity securing by discarding all of the PDCP SDUs belonging to the same PDU Set as well as discarding the corresponding PDCP SDU.

Hereinafter, operations of a base station will be described.

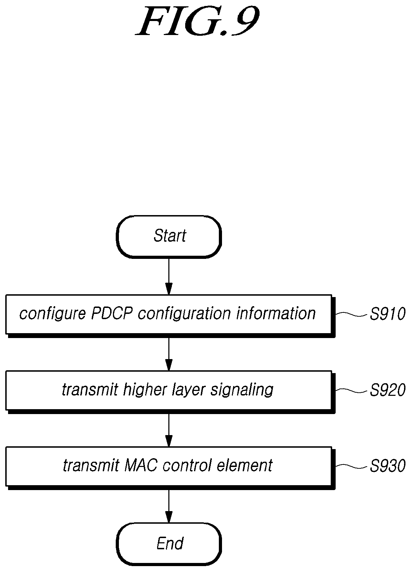

FIG. 9 is a flowchart illustrating operations of a base station according to an embodiment.

Referring to FIG. 9, a method of a base station for controlling UE to process data may include configuring PDCP configuration information for performing a PDU Set-based discard operation (S910).

According to an embodiment, the PDCP configuration information may include i) information for indicating to perform a PDU Set-based discard operation and ii) PDU Set importance-based discard timer information.

According to an embodiment, the information for indicating to perform the PDU Set-based discard operation may be included as an information element of PDCP configuration information. For example, the information for indicating to perform the PDU Set-based discard operation may be included as a pdu-SetDiscard information element. If the corresponding information element is set to true, the UE may identify that the execution of the PDU Set-based discard operation is indicated for the corresponding PDCP entity. According to an embodiment, the PDU Set importance-based discard timer information may be included as an information element distinguished from the typical PDCP discard timer information. The PDU Set importance-based discard timer information may be included as a discardTimerForLowImportance information element. For example, the PDU set importance-based discard timer information may include a timer value applied when the UE performs a service data unit (SDU) discard operation based on the PDU set importance.

According to another embodiment, the PDU Set importance-based discard timer is indicated through an information element distinguished from the PDCP discard timer. The value of the PDU Set importance-based discard timer may be set to any value that is equal to or larger than 0 and less than the value of the PDCP discard timer. For example, the value of the PDU Set importance-based discard timer may be set to 0. The value of the PDCP discard timer may not be set to 0. As another example, the value of the PDU Set importance-based discard timer is set to a value smaller than the value of the PDCP discard timer. Since the value of the timer is set in units of time, a small value means a value representing a short time.

The method of the base station may include transmitting higher layer signaling including PDCP configuration information to the UE (S920).

According to an embodiment, the base station may transmit PDCP configuration information through an RRC message. For example, the RRC message may be an RRC reconfiguration message. The base station may transmit, to the UE, PDCP configuration information through higher layer signaling periodically or according to the occurrence of a specific event.

The method of the base station may include transmitting, to the UE, a MAC control element indicating activation of an SDU discard operation based on PDU Set importance (S930).

According to an embodiment, the SDU discard operation based on PDU Set importance refers to the operation of dividing and applying the discard operation of the PDCP SDU using PDU Set importance information configured in the PDU Set. For example, when PDU Set importance is set to be low, it refers to an operation of performing a discard operation using a PDU Set importance-based discard timer rather than a PDCP discard timer. Since the value of the PDU Set importance-based discard timer is set to be smaller than the value of the PDCP discard timer, the PDCP SDU having the lower importance may be discarded more rapidly. This operation helps reduce the load on the mobile communication system by freeing up capacity more efficiently.

The base station may instruct to switch to the active state for the service data unit (SDU) discard operation based on the PDU Set importance of the inactive state through the MAC CE. Alternatively, the base station may instruct to switch to the inactive state for the service data unit (SDU) discard operation based on the PDU Set importance of the active state through the MAC CE.

For example, the MAC control element may include a field for indicating activation or deactivation of the SDU discard operation based on PDU Set importance. The MAC control element may indicate activation or deactivation of the SDU discard operation based on the PDU Set importance for each DRB.

The MAC control element for indicating activation or deactivation of the SDU discard operation based on the PDU Set importance may be a newly defined MAC control element rather than a typical MAC control element.

Meanwhile, the UE may start a PDU Set importance-based discard timer configured in association with the PDCP SDU in the PDCP entity if the PDU Set importance-based SDU discard operation is activated, and the PDCP SDU belonging to the PDU Set importance of a preset criterion is received from the higher layer.

The SDU discard operation, based on the PDU Set importance, is deactivated after receiving the RRC reconfiguration message. For example, when the RRC reconfiguration message is received, the UE may configure the SDU discard operation based on the PDU Set importance to be in an inactive state. Specifically, when receiving a reconfiguration message (e.g., reconfigurationwithsync) including a handover command according to the movement of the UE, it may be considered that the SDU discard operation function based on the PDU Set importance is disabled/deactivated.

According to an embodiment, the UE may receive the MAC control element to activate or deactivate the SDU discard operation based on the PDU Set importance. When the SDU discard operation based on the PDU Set importance is activated, the UE may identify the PDU Set importance for the PDCP SDU transferred from the higher layer. If the PDCP SDU belongs to a low PDU Set importance, a PDU Set importance-based discard timer configured in association with the PDCP SDU may be started.

According to an embodiment, PDU Set importance may be divided according to a preset criterion. As an example, the PDU Set importance may be divided into two steps: high and low. As another example, PDU Set importance may be divided into N levels. As further another example, PDU Set importance may be set in various ways, and there is no limitation thereto.

When the PDCP SDU belonging to the low PDU Set importance is received, the PDCP entity starts by associating the PDU Set importance-based discard timer rather than the PDCP discard timer. In other words, the UE may divide and apply a timer for discarding the PDU according to PDU Set importance information.

According to an embodiment, the UE may, when the PDU Set importance-based discard timer expires, control the PDCP entity to discard all PDCP SDUs included in the PDU Set to which the PDCP SDU belongs, together with the PDCP data PDU. For example, the PDCP entity of the UE may start a PDU Set importance-based discard timer in association with the PDCP SDU belonging to the low PDU Set importance, and when the PDU Set importance-based discard timer expires, the PDCP entity may discard all the PDCP SDUs included in the PDU Set to which the PDCP SDU belongs.

According to an embodiment, the UE may, when the PDCP entity receives the PDCP SDU to be included in the PDU Set to which the PDCP SDU belongs from the higher layer, the PDCP entity may control to discard the received PDCP SDU as well. For example, the PDCP entity may discard all the PDCP SDUs of the PDU Set to which the PDCP SDU belongs as the PDU Set importance-based discard timer expires and may also discard PDCP SDUs that are divided and received (successively) from the higher layer to be included in the corresponding PDU Set.

According to an embodiment, the UE may, when the SDU discard operation based on the PDU Set importance is in an inactive state or the PDU Set importance-based discard timer is not configured, initiate the PDCP discard timer associated with the PDCP SDU. For example, when the PDU Set importance-based discard timer is configured in the UE and the SDU discard operation based on PDU Set importance is activated, the UE starts the PDU Set importance-based discard timer for the PDCP SDU. As another example, when the SDU discard operation based on the PDU Set importance is deactivated, the UE starts the typical PDCP discard timer in association with the PDCP SDU. As further another example, even when the PDU Set importance-based discard timer is not configured in the UE even when the PDU Set importance-based discard operation is activated, the UE starts the conventional PDCP discard timer in association with the PDCP SDU.

Through the operations according to the embodiments described above, the base station may swiftly alleviate unnecessary congestion caused by low-importance uplink data and thereby secure system capacity.

Hereinafter, embodiments will be described in more detail. In particular, various detailed embodiments of each operation, as well as separate embodiments, will be described. Each operation described below may be performed by a UE and a base station in any combination. Moreover, each detailed embodiment described below may also be executed by a UE and a base station in any combination.

In the following description, the above-described PDU Set importance-based discard timer is referred to as a PDU Set-associated discard timer, a discard timer set to a shorter/smaller value than the typical PDCP discard timer, or a PDU Set discard timer.

### Timer-based PDU Set PDUs discard configuration and operation method

First, a detailed configuration method related to a method for discarding PDUs of a specific PDU Set(s) using a PDCP discard timer is described.

The PDCP discard timer is indicated (e.g., provided, instructed, transmitted) to the UE through PDCP configuration information included in the RRC reconfiguration message. When the UE receives one PDCP SDU from the higher layer, the transmission PDCP entity starts a discard timer (discardTimer) associated with the PDCP SDU. As described above, in the related art, the PDCP discard timer operated in PDCP SDU units is in association with each PDCP SDU.

To process the PDU Set-based discard function, the PDU Set discard indication information for the uplink may be indicated to the UE through PDCP configuration information included in the RRC reconfiguration message. For convenience of description, hereinafter, the PDU-Set-based discard function is used to denote a function of discarding all/remaining/left packets/PDUs (or packets/PDUs of indicated traffic amount/size/packet ratio) in the corresponding PDU Set when one PDU is discarded. However, the embodiments are not limited thereto. For example, the corresponding name (e.g., term) may be changed to any other name (e.g., term).

For example, the PDU Set discard indication information may indicate PDU Set integrated processing information. Alternatively, the PDU Set discard indication information may enable the UE to perform the PDU Set discard function when the PDU Set integrated processing information is set. The PDU Set discard indication information may be set through information for instructing the UE to discard the PDUs of the PDU Set considering whether all the PDUs of the PDU Set are required to use the PDU Set by the application layer for the corresponding DRB.

When the PDU-Set-discard-instruction information/PDU-Set-integrate-processing-information is set/configured/indicated for one QoS flow (or for one or more PDU-Set(s) included in one QoS flow, for the DRB associated with the corresponding PDU Set, or for the PDCP entity associated with the corresponding PDU Set) (in the base station/UE), if it is known (or identified) that one PDU of one PDU-Set is lost, the remaining PDUs of the corresponding PDU Set may be considered as not being required by the application layer. Further, a discard operation may be performed so as not to unnecessarily use radio resources.

For another example, the PDU Set discard indication information may be indicated as information distinguished from the PDU Set integrated processing information. Alternatively, the PDU Set discard indication information may be indicated as information divided so that the UE performs the PDU Set discard function when the PDU Set integrated processing information is set.

When the PDU-Set-integrate-processing-information is set/configured/indicated for one QoS flow (or for one or more PDU-Set(s) included in one QoS flow, or through RRC signaling for the DRB associated with the corresponding PDU Set, or through RRC signaling for the PDCP entity associated with the corresponding PDU Set, or through NAS signaling by the higher layer for one QoS flow) (in the base station/UE), if it is known (or identified) that one PDU of one PDU-Set is lost for the DRB where the PDU Set discard indication information is set, the remaining PDUs of the corresponding PDU Set may be considered as not being required by the application layer. Further, a discard operation may be performed so as not to unnecessarily use radio resources.

As another example, the PDU Set discard indication information may be indicated by new/other PDU Set parameter information distinguished from the PDU Set integrated processing information. For example, the PDU level/ratio of the PDU Set required for using the PDU Set by the application layer may be indicated. This is information used for corresponding PDU Set processing (e.g., decoding) in the application layer and may be indicated by, e.g., the ratio of the number of PDUs required for successful processing to the total number of PDUs included in the corresponding PDU Set for one PDU Set, the ratio of the number of PDU Set Sequence Numbers required for successful processing to the (total) number of PDU Set Sequence Numbers associated with the corresponding PDU Set, and the ratio of the size (byte) of PDU Set PDUs required for successful processing to the (total) size (byte) PDU Set PDUs associated with the corresponding PDU Set. As another example, it may be indicated with a different weight according to PDU Set Importance. As another example, the PCF may determine the corresponding PDU Set QoS parameter based on information provided by the application function AF and/or the local configuration. The PDU Set QoS parameter, as part of the PCC rule, is sent to the SMF. The SMF sends it, as part of the QoS profile, to the base station. If the base station receives and supports the corresponding parameter, the base station may use the same for PDU Set-based QoS processing.

When the PDU-Set-integrate-processing-information is set/configured/indicated for one QoS flow (or for one or more PDU-Set(s) included in one QoS flow, or through RRC signaling for the DRB associated with the corresponding PDU Set, or through RRC signaling for the PDCP entity associated with the corresponding PDU Set, or through NAS signaling by the higher layer for one QoS flow) (in the base station/UE), if it is known (or identified) that a corresponding level/proportion of PDUs of one PDU-Set are lost for the DRB where the PDU Set discard indication information is set, the remaining PDUs of the corresponding PDU Set may be considered as not being required by the application layer. Further, a discard operation may be performed so as not to unnecessarily use radio resources.

As another example, the PDU Set PDUs discard indication information may include information for indicating enable/activate of a corresponding function. When information for indicating enable/activate of the corresponding function is set/indicated/configured, the UE (RRC of the UE) may indicate the corresponding function (or initiate/start the corresponding function) to the lower layer (e.g., PDCP). And/or the UE (RRC/PDCP of the UE) may configure to consider the corresponding function to be enabled/activated. Otherwise, the UE (RRC/PDCP of the UE) may configure to consider the corresponding function to be disabled/deactivated.

As another example, PDU Set discard instruction information may be indicated through PDU Set discard timer information and/or PDU Set discard enable/activate information.

When the PDU-Set-integrate-processing-information is set/configured/indicated for one QoS flow (or for one or more PDU-Set(s) included in one QoS flow, or through RRC signaling for the DRB associated with the corresponding PDU Set, or through RRC signaling for the PDCP entity associated with the corresponding PDU Set, or through NAS signaling by the higher layer for one QoS flow) (in the base station/UE), if the PDU Set discard timer information and/or PDU Set discard enable/activate information is set/configured/indicated, if it is known (or identified) that one PDU of one PDU-Set is lost for the DRB where the PDU Set discard indication information is set, the remaining PDUs of the corresponding PDU Set may be considered as not being required by the application layer. Further, a discard operation may be performed so as not to unnecessarily use radio resources.

As another example, when the discard timer for one PDU included in one PDU-Set expires, the UE may know (or identify) that one PDU of the corresponding PDU-Set has been lost. The base station may set the PDCP discard timer value considering the PDU Set delay budget (of the wireless network) (PSDB, PDU Set Delay Budget (PSDB), upper bound for the duration between the reception time of the first PDU (at the UPF for DL, at the UE for UL) and the time when all PDUs of a PDU Set have been successfully received (at the UE in DL, at the UPF in UL). A QoS Flow is associated with only one PSDB, and when available, it applies to both DL and UL and supersedes the PDB of the QoS flow.). If the PDCP discard timer set with the corresponding value expires, the UE may consider that the PDU Set delay budge is not met, discarding the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). Even when the PDCP discard timer for any/remaining/all/all stored/not discarded/not discarded remaining/remaining, without being discarded, PDCP SDU(s) included in the corresponding PDU Set does not expire, the UE may discard the corresponding PDCP SDU(s), together with the corresponding PDCP Data PDU(s). If the corresponding PDCP data PDU has already been submitted to the lower layer, the corresponding discard may be indicated to the lower layer. The UE may maintain/store discard-related information (e.g., PDU Set-related information associated with the discarded PDCP SDU). If the UE receives the (successive) PDCP SDU associated with/included in the corresponding PDU Set from the higher layer, the UE discards the corresponding PDCP SDU (or discards the corresponding PDCP SDU without starting the discard timer associated with the corresponding PDCP SDU). Alternatively, the UE sets/configures/indicates the corresponding discard timer as 0 and operates. Alternatively, the UE discards the corresponding PDCP SDU without starting the discard timer associated with the corresponding PDCP SDU. Because the PDCP SDU has been discarded, the UE (or the transmission PDCP entity) does not associate a COUNT value (corresponding to TX_NEXT) for the PDCP SDU. The UE (or transmission PDCP entity) does not perform one or more header compression, uplink data compression, integrity protection, and ciphering, set the PDCP SN of the PDCP Data PDU, increment TX_NEXT by on. submit the resulting PDCP Data PDU to lower layer, and storage of the corresponding PDCP SDU for the corresponding PDCP SDU.

As another example, to identify the loss for one PDU included in one PDU-Set, the UE may be aware of that one PDU of the corresponding PDU-Set is lost when the corresponding discard timer (indicated by the base station) reaches a threshold (or may identify the loss or may consider it as being lost). The base station may set/configure/indicate the threshold considering the PDU Set delay budget (of the wireless network). If the PDCP discard timer reaches the corresponding threshold, the UE may consider that the PDU Set delay budge is not met, discarding the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). Even when the PDCP discard timer for any/remaining/all/all stored/not discarded/not discarded remaining/remaining, without being discarded, PDCP SDU(s) included in the corresponding PDU Set does not expire, the UE may discard the corresponding PDCP SDU(s), together with the corresponding PDCP Data PDU(s). If the corresponding PDCP data PDU has already been submitted to the lower layer, the corresponding discard may be indicated to the lower layer.

As another example, to discern/identify the loss for one PDU included in one PDU-Set, if receiving related indication information from the base station before the corresponding discard timer expires, the UE may be aware of that one PDU of the corresponding PDU-Set is lost (or may identify the loss, or may consider it as being lost). The base station may indicate the corresponding indication information to the UE through the PDCP Control PDU.

As an example, the corresponding indication information may be transmitted through a PDCP Status report having a value of PDU type 000. To that end, the base station (or the transmission PDCP entity of the base station or the reception PDCP entity of the base station) may generate/compile the PDCP status report and indicate (transmit, provide, send, signal) it to the UE. The COUNT value for the corresponding SPU/PDU of the corresponding PDU Set may be included in the first missing COUNT (FMC) field indicating the COUNT value of the first lost PDCP SDU in the reordering window. The base station may transmit, without the bitmap field (This field indicates which SDUs are missing and which SDUs are correctly received in the receiving PDCP entity.) or with the length of the bitmap field set to 0. Alternatively, the base station may include bitmap field information for identifying whether one PDU included in the corresponding PDU Set is lost as 0 or 1 for one or more PDU Set(s) and transmit the same. The position of the Nth bit of the corresponding bitmap may be used to identify whether one PDU included in the Nth PDU Set in the PDU Set having the first lost PDU/SDU is lost. If the corresponding PDCP status report is received, the UE (or the transmission PDCP entity of the UE) may be aware of that the PDCP SDU/PDU having the COUNT value included in the value of the FMC field is lost. And/or the UE (or transmission PDCP entity of the UE) may be aware of that the PDU Set (or one PDU/SDU of the corresponding PDU Set) including the PDCP SDU/PDU having the COUNT value included in the value of the FMC field and the PDU Set (or one PDU/SDU of the corresponding PDU Set) where the bitmap is set to 0 (or 1). The UE may discard the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). Even when the PDCP discard timer for any/remaining/all/all stored/not discarded/not discarded remaining/remaining, without being discarded, PDCP SDU(s) included in the corresponding PDU Set does not expire, the UE may discard the corresponding PDCP SDU(s), together with the corresponding PDCP Data PDU(s). If the corresponding PDCP data PDU has already been submitted to the lower layer, the corresponding discard may be indicated to the lower layer.

As another example, a PDCP Control PDU (e.g., having one value among PDU type 100-111) distinguished from the PDCP status report having the PDU type 000 value may be defined, and the corresponding indication information may be transmitted. To that end, the base station (or the transmission PDCP entity of the base station or the reception PDCP entity of the base station) may generate/compile the corresponding PDCP Control PDU and indicate (transmit, provide, send, signal) it to the UE. The corresponding PDCP Control PDU may include a field for indicating the lost PDCP SDU (or PDCP SDU/PDU of the lost PDU Set). The corresponding field may include the COUNT value (or PDCP SN) for the corresponding SDU/PDU of the corresponding PDU Set. And/or, the base station may include bitmap field information for identifying whether one SDU/PDU included in the corresponding PDU Set is lost as 0 or 1 for one or more PDU Set(s) and transmit the same. The base station may transmit it without the bitmap field or with the length of the bitmap field set to 0. Alternatively, the base station may use the position of the Nth bit of the corresponding bitmap to identify whether one PDU included in the Nth PDU Set in the PDU Set having the first lost PDU/SDU is lost. If the corresponding PDCP Control PDU is received, the UE (or the transmission PDCP entity of the UE) may be aware of that the corresponding PDCP SDU/PDU is lost through the field for indicating the lost PDCP SDU (or PDCP SDU/PDU of the lost PDU Set). And/or the UE (or transmission PDCP entity of the UE) may be aware of that the PDU Set (or one PDU/SDU of the corresponding PDU Set) where the bitmap is set to 0 (or 1) is lost. The UE may discard the corresponding PDCP SDU. The UE may discard any/remaining/all/all stored/not discarded/not discarded remaining/remaining, without being discarded, PDCP SDU(s) included in the corresponding PDU Set, together with the corresponding PDCP Data PDU(s). Even when the PDCP discard timer for any/remaining/all/all stored/not discarded/not discarded remaining/remaining, without being discarded, PDCP SDU(s) included in the corresponding PDU Set does not expire, the UE may discard the corresponding PDCP SDU(s), together with the corresponding PDCP Data PDU(s). If the corresponding PDCP data PDU has already been submitted to the lower layer, the corresponding discard may be indicated to the lower layer.

As another example, when the PDU Set discard timer information and/or PDU Set discard enable/activate information is set/configured/indicated, if the first SDU associated with/included in one PDU Set is received from the higher layer, the UE (or transmission PDCP entity) starts the PDU Set discard timer associated with the PDCP SDU. When the corresponding PDU Set discard timer expires, the UE may know (or identify, recognize, be aware of) that one SDU/PDU of the corresponding PDU-Set has been lost. The base station may set the PDU Set discard timer value considering the PDU Set delay budget. If the PDU Set discard timer set with the corresponding value expires, the UE may consider that the PDU Set delay budge is not met, discarding the corresponding PDCP SDU. The UE may discard any/remaining/all/all stored/not discarded/not discarded remaining/remaining, without being discarded, PDCP SDU(s) included in the corresponding PDU Set. Even when the PDCP discard timer for any/remaining/all/all stored/not discarded/not discarded remaining/remaining, without being discarded, PDCP SDU(s) included in the corresponding PDU Set does not expire, the UE may discard the corresponding PDCP SDU(s), together with the corresponding PDCP Data PDU(s). If the corresponding PDCP data PDU has already been submitted to the lower layer, the corresponding discard may be indicated to the lower layer.

As another example, to discern/identify the loss for one PDU included in one PDU-Set, the UE may be aware of that one PDU of the corresponding PDU-Set is lost when the corresponding PDU Set discard timer (indicated by the base station) reaches a threshold (or may identify the loss or may consider it as being lost). The base station may set a threshold considering the PDU Set delay budget. If the PDU Set discard timer reaches the corresponding threshold, the UE may consider that the PDU Set delay budge is not met, discarding the corresponding PDCP SDU. The UE may discard any/remaining/all/all stored/not discarded/not discarded remaining/remaining, without being discarded, PDCP SDU(s) included in the corresponding PDU Set. Even when the PDCP discard timer for any/remaining/all/all stored/not discarded/not discarded remaining/remaining, without being discarded, PDCP SDU(s) included in the corresponding PDU Set does not expire, the UE may discard the corresponding PDCP SDU(s), together with the corresponding PDCP Data PDU(s). If the corresponding PDCP data PDU has already been submitted to the lower layer, the corresponding discard may be indicated to the lower layer.

### PDU Set importance (PSI)-based PDU Set PDUs discard configuration and operation method

Hereinafter, a method for discarding PDUs of a specific PDU Set(s) based on PSI (PDU Set importance) will be described. The method described below may be performed combined/merged with any PDU Set PDUs discard method based on timer, as described above, as necessary.

If data deluge occurs in the network, the base station may attempt to limit UE uplink traffic transmission. As described above, traffic associated with a specific PDU Set for a specific QoS flow (e.g., a QoS flow where PDU Set integrated processing information is set/configured/indicated) may not be required to be transmitted if it exceeds the corresponding PDU Set delay budget. Therefore, if indication information for limiting the UE uplink traffic transmission is transmitted to the UE for any reason, e.g., data deluge, it may be preferable that the UE discards the PDUs that may not require transmission due to exceeding the corresponding PDU Set delay budget while the data deluge lasts, considering the same. When PDUs are discarded by the network indication, the PDUs may be discarded considering the PSI.

As an example, PSI-based PDU Set PDUs discard configuration information may be indicated (signaled, transmitted, provided, sent) to the UE through an RRC reconfiguration message. The corresponding configuration information may be indicated as configuration information discerned from the above-described arbitrary configuration information. Alternatively, the corresponding configuration information may be indicated using one of the above-described arbitrary configuration information. Alternatively, the corresponding configuration information may be indicated when the above-described arbitrary configuration information is set/indicated/configured. The corresponding configuration information may be configured per UE. Alternatively, the corresponding configuration information may be configured in the SDAP configuration information. Thus, a PSI-based PDU Set PDUs discard function may be provided for one or more DRBs providing one or more QoS-flows/PDU-Sets through one configuration. Alternatively, the corresponding configuration information may be configured per DRB (e.g., in the PDCP configuration information).

As another example, the PSI-based PDU Set PDUs discard configuration information may include information for indicating enable/activate of a corresponding function. When information for indicating enable/activate of the corresponding function is set/indicated/configured, the UE (RRC of the UE) may indicate the corresponding function (or initiate/start the corresponding function) to the lower layer (e.g., PDCP). And/or the UE (RRC/PDCP of the UE) may configure to consider the corresponding function to be enabled/activated. Otherwise, the UE (RRC/PDCP of the UE) may configure to consider the corresponding function to be disabled/deactivated.

As another example, the PSI-based PDU Set PDUs discard configuration information may include information for discerning and discarding the corresponding PDU Set(s) (or corresponding PDU Set(s) PDUs) based on the PSI. For example, discarded PSI level information (or discarded PSI level set, or discarded PSI level group, or discarded minimum PSI level, or discarded maximum PSI level, or discarded reference/threshold PSI level, or the above-described arbitrary PSI level except for the default PSI level, where the default PSI level may denote a PSI level applied to the PDUs not including the PSI level discerned by the application layer in one QoS flow) may be included. When the corresponding function is enabled/activated, and/or when indication information enabling/activating the corresponding function is received, and/or when (changed) corresponding PSI level information is received, the UE (or transmission PDCP entity) may discard any/remaining/all/all stored/not discarded/not-discarded remaining/remaining, without being discarded, PDCP SDU(s) associated with the PDU Set(s) having the corresponding PSI level (or less important than the corresponding PSI level, or having an importance/importance value lower than the corresponding PSI level, or having an importance lower than the corresponding PSI level and including the corresponding PSI level). For any/remaining/all/all stored/not discarded/not discarded remaining/remaining, without being discarded, PDCP SDU(s) included in the corresponding PDU Set, the UE may discard the corresponding PDCP SDU(s), together with the corresponding PDCP Data PDU(s). If the corresponding PDCP data PDU has already been submitted to the lower layer, the corresponding discard may be indicated to the lower layer.

As another example, until before the corresponding function is disabled/deactivated, and/or until before the indication information for disabling/deactivating the corresponding function is received, the UE (or transmission PDCP entity) may discard any/remaining/all/all stored/not discarded/not-discarded remaining/remaining, without being discarded, PDCP SDU(s) associated with the PDU Set(s) having the corresponding PSI level (or less important than the corresponding PSI level, or having an importance/importance value lower than the corresponding PSI level, or having an importance lower than the corresponding PSI level and including the corresponding PSI level). For any/remaining/all/all stored/not discarded/not discarded remaining/remaining, without being discarded, PDCP SDU(s) included in the corresponding PDU Set, the UE may discard the corresponding PDCP SDU(s), together with the corresponding PDCP Data PDU(s). If the corresponding PDCP data PDU has already been submitted to the lower layer, the corresponding discard may be indicated to the lower layer.

As another example, until before the corresponding function is disabled/deactivated, and/or until before the indication information for disabling/deactivating the corresponding function is received, the UE discards the corresponding PDCP SDU (or discards the corresponding PDCP SDU without starting the discard timer associated with the corresponding PDCP SDU) if receiving the PDCP SDU associated with/included in the PDU Set(s) having the corresponding PSI level (or less important than the corresponding PSI level, or having an importance/importance value lower than the corresponding PSI level, or having an importance lower than the corresponding PSI level and including the corresponding PSI level) from the higher layer. Alternatively, the UE sets/configures/indicates the corresponding discard timer as 0 and operates. Alternatively, the UE discards the corresponding PDCP SDU without starting the discard timer associated with the corresponding PDCP SDU. Because the PDCP SDU has been discarded, the UE (or the transmission PDCP entity) does not associate a COUNT value (corresponding to TX_NEXT) for the PDCP SDU. The UE (or transmission PDCP entity) does not perform one or more header compression, uplink data compression, integrity protection, and ciphering, set the PDCP SN of the PDCP Data PDU, increment TX_NEXT by one, submit the resulting PDCP Data PDU to lower layer, and storage of the corresponding PDCP SDU for the corresponding PDCP SDU.

As another example, until before the corresponding function is disabled/deactivated, and/or until before the indication information for disabling/deactivating the corresponding function is received, the UE (or transmission PDCP entity or transmission SDAP entity), when receiving the PDCP-SDU/SDAP-SDU from the higher layer, may check whether it is the SDU associated with/included in the PDU Set(s) having the corresponding PSI level (or less important than the corresponding PSI level, or having an importance/importance value lower than the corresponding PSI level, or having an importance lower than the corresponding PSI level and including the corresponding PSI level) and discard the corresponding PDCP-SDU/SDAP-SDU.

As another example, until before the corresponding function is disabled/deactivated, and/or until before the indication information for disabling/deactivating the corresponding function is received, the UE (or transmission PDCP entity or transmission SDAP entity) may discard the corresponding PDCP-SDU/SDAP-SDU if it is the SDU associated with/included in the PDU Set(s) having the corresponding PSI level (or less important than the corresponding PSI level, or having an importance/importance value lower than the corresponding PSI level, or having an importance lower than the corresponding PSI level and including the corresponding PSI level) when receiving the PDCP/SDU/SDAP-SDU from the higher layer. Otherwise, the UE may start the discard timer associated with the corresponding PDCP SDU. For the discarded PDCP SDU, the COUNT value (corresponding to TX_NEXT) is not associated. The UE (or transmission PDCP entity) may perform header compression, uplink data compression, integrity protection, and ciphering, set the PDCP SN of the PDCP Data PDU, increment TX_NEXT by on. submit the resulting PDCP Data PDU to lower layer, and storage of the corresponding PDCP SDU for the corresponding PDCP SDU.

As another example, until before the corresponding function is disabled/deactivated, and/or until before the indication information for disabling/deactivating the corresponding function is received, the UE may be configured to operate with the PDU Set importance-based discard timer value associated with/mapped to the value of the corresponding PSI level (or less important than the corresponding PSI level, or having an importance/importance value lower than the corresponding PSI level, or having an importance lower than the corresponding PSI level and including the corresponding PSI level). For example, it may be allowed to have a specific PDU Set importance-based discard timer value, such as 0, to immediately discard the corresponding PDCP SDU. As another example, it may be allowed to have a PDU Set importance-based discard timer value shorter/smaller than the PDCP discard timer value used in the normal/general context, thereby increasing a chance of being discarded without being transmitted. The corresponding PDU Set importance-based discard timer may be indicated as an information element discerned from the conventional PDCP discard timer. The corresponding PDU Set importance-based discard timer may be used when the corresponding function is enabled/activated, and/or when the indication information enabling/activating the corresponding function is received, and/or until before it is disabled/deactivated, and/or until before the indication information for disabling/deactivating the corresponding function is received. Otherwise, the conventional PDCP discard timer may be used/started.

As another example, when the above-described function is applied, the PDU Set discard timer may be allowed to have a specific discard timer value such as 0, thereby immediately discarding the corresponding PDCP SDU. As another example, it may be allowed to have a PDU Set discard timer (PDU Set importance-based discard timer) value shorter/smaller than the PDU discard timer value used in the normal/general context, thereby increasing a chance of being discarded without being transmitted. The corresponding discard timer may be indicated as an information element (e.g., PDU Set discard timer 2) discerned from the PDU Set discard timer (e.g., PDU Set discard timer 1). The corresponding discard timer (e.g., PDU Set discard timer 2) may be used when the corresponding function is enabled/activated, and/or when the indication information enabling/activating the corresponding function is received, and/or until before it is disabled/deactivated, and/or until before the indication information for disabling/deactivating the corresponding function is received. Otherwise, the PDU Set discard timer (e.g., PDU Set discard timer 1) may be used.

As another example, if PDU Set integrated processing information is set/configured/indicated to the UE after the corresponding function is disabled/deactivated, and/or even after the indication information for disabling/deactivating the corresponding function is received, the PDU Set discarded by the UE in the activated state of the corresponding function is useless even when the PDCP SDUs associated with the corresponding PDU Set successively arrive thereafter. For example, even when the context in which transmission is difficult due to network deluge is addressed, but if one PDCP SDU of the corresponding PDU Set has been discarded immediately before, remaining/all PDCP SDUs associated with the corresponding PDU Set, although newly arriving, may be required to be discarded. The UE may maintain/store discard-related information (e.g., PDU Set-related information associated with the discarded PDCP SDU). If the UE receives the (successive) PDCP SDU associated with/included in the corresponding PDU Set(s) from the higher layer, the UE discards the corresponding PDCP SDU (or discards the corresponding PDCP SDU without starting the discard timer associated with the corresponding PDCP SDU). Alternatively, the UE sets/configures/indicates the corresponding discard timer as 0 and operates. Alternatively, the UE discards the corresponding PDCP SDU without starting the discard timer associated with the corresponding PDCP SDU. Since the PDCP SDU has been discarded, the UE (or the transmission PDCP entity) does not associate a COUNT value (corresponding to TX_NEXT) for the PDCP SDU. The UE (or transmission PDCP entity) does not perform one or more header compression, uplink data compression, integrity protection, and ciphering, set the PDCP SN of the PDCP Data PDU, increment TX_NEXT by one, submit the resulting PDCP Data PDU to lower layer, and storage of the corresponding PDCP SDU for the corresponding PDCP SDU.

As another example, the base station (L2 entity of the base station) may transmit any control signal (e.g., PDCCH/DCI, MAC CE, RLC control PDU, PDCP control PDU, SDAP control PDU) for indicating enable/activate and/or disable/deactivate of the above-described arbitrary function to the UE (L2 entity of the UE). For convenience of description, a method will be described as using a PDCP control PDCU below. This is only for convenience of description. It is obvious that the use of any other control signal is also included in the scope of the disclosure.

The base station may indicate a PDCP Control PDU for indicating to enable/activate and/or disable/deactivate the above-described arbitrary function to the UE. As an example, the corresponding PDCP Control PDU may discern the enable/activate indication and disable/deactivate indication through different PDU type values and indicate the same to the UE. As another example, the corresponding PDCP Control PDU may include a one-bit field having one PDU type value to discern the enable/activate indication and the disable/deactivate indication. As another example, the corresponding PDCP Control PDU may discern the enable/activate indication and the disable/deactivate indication through toggle/on-off when the UE receives the corresponding data from the base station without including the one-bit field for discerning the enable/activate indication and the disable/deactivate indication and having one PDU type value. For example, when the UE receives the first corresponding PDCP Control PDU (and/or when transmitting, to the base station, any acknowledge message therefor (e.g., HARQ, RLC ACK, RLC Status report, PDCP control PDU ACK, etc.)) (in a state in which the corresponding function is configured as disabled/deactivated (or enabled/activated)), the UE may consider it as enabled/activated (or disabled/deactivated). When receiving the corresponding PDCP Control PDU (and/or when transmitting, to the base station, any acknowledge message therefor (e.g., HARQ, RLC ACK, RLC Status report, PDCP Control PDU ACK, etc.) in a state in which the corresponding function is configured as enabled/activated (or disabled/deactivated), the UE may consider it as disabled/deactivated (or enabled/activated).

As another example, the corresponding PDCP Control PDU may include the discarded PSI level information (or discarded PSI level, or discarded PSI level group, or discarded minimum PSI level, or discarded maximum PSI level, or discarded reference/threshold PSI level, or the above-described arbitrary PSI level discarded except for the default PSI level). As another example, the corresponding PDCP Control PDU may be constituted of a one-bit field including one minimum/threshold/maximum PSI level information discarded. As another example, the corresponding PDCP Control PDU may indicate the discarded PSI level information in the form of a bitmap. For example, 16 bits from PSI level 0 (when the PSI level has a value between 0 and 15. 1 if the PSI level has a value between 1 and 16) to PSI level 15 (or 16) are present, and when the PDU Set(s) PDUs of the corresponding PSI level are discarded and otherwise may be discerned through one bit of 1 or 0.

As another example, the corresponding PDCP Control PDU may indicate the discarded PSI level group information in the form of a bitmap. The 16 PSI levels may be discerned associated with/mapped to the PSI level group of a smaller number (e.g., one bit (two groups) or two bits (three groups or four groups) according to importance/discard priority). The corresponding association/mapping information may be pre-configured to the UE through RRC signaling. When the PDU Set(s) PDUs associated with the corresponding PSI level group are discarded and otherwise may be discerned through one bit of 1 or 0. As another example, the corresponding PDCP Control PDU may include timer information for limiting the time when the corresponding function operates. When receiving the PDCP Control PDU for enabling/activating the corresponding function, the UE may start/restart the corresponding timer. When the corresponding timer expires, the UE may disable/deactivate the corresponding function. In the disclosure, any PSI level may be mapped to any PSI level group and applied.

As another example, the corresponding PDCP Control PDU may include timer information for limiting/indicating the execution time for any PDU Set discard function.

As another example, the corresponding PDCP Control PDU may include discard timer (PDCP discard timer or PDU Set discard timer) information applied to the discarded PSI level (or discarded PSI level group). If receiving the corresponding PDCP Control PDU, the UE (or transmission PDCP entity) may start the discard timer having the discard timer value (as expiration/duration value) received for the PDCP SDU associated with/included in the PDU Set(s) having the value of the corresponding PSI level (or less important than the corresponding PSI level, or having a lower importance/importance value than the corresponding PSI level, or having a lower importance than the corresponding PSI level and including the corresponding PSI level) when receiving the PDCP-SDU from the higher layer. If the PDCP discard timer for the PDCP SDU associated with/included in the PDU Set(s) having the value of the corresponding PSI level (or less important than the corresponding PSI level, or having a lower importance/importance value than the corresponding PSI level, or having a lower importance than the corresponding PSI level and including the corresponding PSI level) exceeds the received discard timer expiration/duration value when receiving the corresponding PDCP Control PDU, the UE may consider the corresponding discard timer as expiring. (or the UE stops the corresponding discard timer. or the UE releases/deletes/removes/terminates the corresponding discard timer.) The UE may discard the corresponding (stored) PDCP SDU(s). The UE may discard the PDCP SDU(s) along with the corresponding PDCP Data PDU(s). If the corresponding PDCP data PDU has already been submitted to the lower layer, the corresponding discard may be indicated to the lower layer.

### Operation method according to PDU Set discard timer change/modification reconfiguration

The above-described PDU Set discard function and related information may be set/configured/indicated to the UE through RRC signaling. For example, the discard timer may be modified/changed and indicated. When the discard timer is modified, if the modified value has a smaller value, when the PDCP-SDU is received from the higher layer to start the corresponding discard timer, the corresponding discard timer may expire. In this case, the UE may modify/change/reconfigure the expiration/duration value of the corresponding discard timer. If any discard timer that is running exceeds the modified/changed/reconfigured discard timer duration, the UE may discard the corresponding PDCP SDU. The UE may consider the corresponding discard timer as expiring. (or the UE stops the corresponding discard timer. or the UE releases/deletes/removes/terminates the corresponding discard timer.) The UE may discard the corresponding PDCP SDU(s). The UE may discard the PDCP SDU(s) along with the corresponding PDCP Data PDU(s). For any/remaining/all/all stored/not discarded/not discarded remaining/remaining, without being discarded, PDCP SDU(s) included in the corresponding PDU Set, the UE may discard the corresponding PDCP SDU(s), together with the corresponding PDCP Data PDU(s). If the corresponding PDCP data PDU has already been submitted to the lower layer, the corresponding discard may be indicated to the lower layer.

### PDU Set discard disable/deactivate timer configuration and operation method

In the above-described embodiments, when the corresponding PDU Set(s) PDUs discard is enabled/activated, indicating to disable/deactivate the corresponding function triggers additional signaling. To prevent this, the base station may include timer information for limiting the duration that the corresponding function remains operational in the enabled/activated state when the corresponding function is enabled/activated through RRC signaling and indicate the same to the UE. As an example, when the corresponding timer information and/or any PDU Set discard enable/activate indication information is received/configured through an RRC message, the UE may start/restart the corresponding timer. As another example, the UE may start/restart the corresponding timer when the corresponding timer information and/or any PDU Set discard enable/activate indication information is received/configured through the PDCP Control PDU. As another example, the UE may start/restart the corresponding timer received through RRC when any PDU Set discard enable/activate indication information is received/configured through the PDCP Control PDU. When the corresponding timer expires, the UE may disable/deactivate the corresponding function. When the corresponding timer is running, the UE may perform any corresponding PDU Set PDUs discard operation.

As another example, the base station may indicate the RRC reconfiguration message to the UE to modify/reconfigure the corresponding PDCP entity. When the UE receives the RRC reconfiguration message including information for reconfiguring/modifying the corresponding PDCP entity, if any PDU Set discard enable/activate indication information is not included, the UE may configure the corresponding function to be considered as disabled/deactivated. For example, when any PDU Set discard enable/activate indicate/trigger/initiate/associate/support is not included although it is not included as no change is made to the corresponding function according to the delta configuration, the UE may configure the corresponding function to be considered as disabled/deactivated. When intending to maintain the corresponding function, although it indicates the delta configuration, the corresponding PDU Set discard enable/activate indication information may be included. Even when receiving a reconfiguration message (e.g., reconfigurationwithsync) including a handover command according to the movement of the UE, the UE may configure the corresponding function to be considered as disabled/deactivated. When intending to maintain the corresponding function during handover, although the delta configuration is indicated, the corresponding PDU Set discard enable/activate indication information may be included.

Hereinafter, another embodiment of the disclosure will be additionally described in detail.

If the SDUs/PDUs are discarded through any of the above-described functions in the UE (or base station), it may be preferable for the UE (or base station) to indicate the discarded SN to the base station (or UE). When the UE (or transmission PDCP entity of the UE/base station) discards the PDCP SDU(s) already associated with the PDCP SN, an SN gap may be caused in the transmission PDCP data PDUs of the UE/base station. This may increase the PDCP reordering delay in the reception PDCP entity of the base station/UE. The UE or the base station may be delayed according to various factors. It may be preferable to provide discarded information to support rapid processing of XR and media application data requiring low-latency high-speed transmission. In particular, in the handover process, it is possible to effectively transmit/receive PDCP data by reducing the reordering delay at the receiving side while avoiding unnecessary transmission/retransmission of the discarded PDCP SDU/PDU through the corresponding information.

For example, the UE (or the transmission PDCP entity of the UE) may trigger the discard status report. The discard status report may denote a status report including PDU Set PDUs discard information. However, the embodiments are not limited thereto. This is only for convenience of description and may be replaced with any other term. For example, the discard status report may be triggered when one or more of a PDCP entity reconfiguration request of the higher layer (RRC) and a PDCP data recovery request of the higher layer (RRC) are made. As another example, the discard status report may be triggered when any discard timer associated with the PDU Set (or the PDU Set discard timer or the PDCP discard timer for the PDCP SDU associated with the PDU Set) expires. As another example, the discard status report may be triggered when any discard timer (or the PDU Set discard timer, or the PDCP discard timer for the PDCP SDU associated with the PDU Set) associated with the PDU Set reaches a specific threshold indicated by the base station. As another example, the discard status report may be triggered when a PDU Set Importance (PSI)-based PDU Set PDUs discard is set/configured/indicated by the base station. As another example, for DRBs configured to send the discard status report in uplink via RRC, the UE (transmission PDCP entity) may trigger the discard status report when the higher layer indicates one of PDCP reconfiguration and PDCP data recovery.

As another example, when the discard status report is triggered, the UE (or the transmission PDCP entity of the UE) may generate/compile the discard status report. The UE (or the transmission PDCP entity of the UE) may submit the corresponding discard status report to the first PDCP PDU for transmission to the lower layer.

As another example, if the PDCP state report according to the related art is triggered, the UE (or the transmission PDCP entity of the UE) may compile the PDCP state report. The UE (or the transmission PDCP entity of the UE) may submit the PDCP state report of the related art to the first PDCP PDU for transmission to the lower layer. The UE (or the transmission PDCP entity of the UE) may submit the corresponding discard status report to the second PDCP PDU for transmission to the lower layer.

As another example, if the discard status report is triggered, the UE (or the transmission PDCP entity of the UE) may compile the discard status report. The UE (or the transmission PDCP entity of the UE) may submit the corresponding discard status report to the first PDCP PDU for transmission to the lower layer for the UM DRBs.

As another example, if the discard status report is triggered, the UE (or the transmission PDCP entity of the UE) may compile the discard status report. If the PDCP state report according to the prior art is not triggered (or is not compiled or is not configured/set to send the PDCP state report to the AM DRB), the corresponding discard status report may be submitted to the first PDCP PDU for transmission to the lower layer.

As another example, the target base station may set the information for indicating to send the discard status report in the uplink and may indicate (e.g., signal, transmit, provide, send) to the UE through the source base station.

As another example, the discard status report may include the corresponding information in the RRC reconfiguration complete message when the UE completes the RRC handover procedure by synchronizing with the target cell and/or sending the RRC reconfiguration complete message to the target base station.

As another example, when the UE completes the RRC handover procedure by synchronizing with the target cell and/or sending the RRC reconfiguration complete message to the target base station, the UE may send the same together with the RRC reconfiguration complete message (or the first PUSCH of the DRB following the RRC reconfiguration complete message).

As another example, the UE (or the transmission RLC entity of the UE) may trigger the discard status report. For example, the discard status report may be triggered by the PDCP discard indication associated with the PDU Set discard for the PDCP SDU(s) already submitted to the RLC of the PDCP layer. As another example, the discard status report may be triggered when any discard timer associated with the PDU Set (or the PDU Set discard timer or the PDCP discard timer for the PDCP SDU associated with the PDU Set) expires. As another example, the discard status report may be triggered when any discard timer (or the PDU Set discard timer, or the PDCP discard timer for the PDCP SDU associated with the PDU Set) associated with the PDU Set reaches a specific threshold indicated by the base station. As another example, the discard status report may be triggered when a PDU Set Importance (PSI)-based PDU Set PDUs discard is set/configured/indicated by the base station. As another example, for DRBs configured to send the discard status report in uplink via RRC, the UE (transmission RLC entity) may trigger the discard status report when the PDCP layer indicates PDU Set discard.

As another example, when the discard status report is triggered, the UE (or the transmission RLC entity of the UE) may generate/construct the discard status report. The UE (or transmission RLC entity of the UE) may construct the discard status report at the first transmission opportunity indicated by the lower layer (e.g., MAC) and indicate the same to the lower layer.

As another example, when the discard status report is triggered, the UE (or the transmission RLC entity of the UE) may generate/construct the discard status report. If the prohibit timer for the corresponding status report is running, the corresponding prohibit timer may expire, and the UE (or transmission RLC entity of the UE) may construct the discard status report at the first transmission opportunity indicated by the lower layer (e.g., MAC) and indicate the same to the lower layer.

As another example, even when receiving a negative acknowledgement for the discarded RLC SDU, the corresponding UE (or transmission RLC entity of the UE) may not consider that the negative acknowledgement is not received for retransmission for the corresponding RLC SDU. As another example, even when receiving a negative acknowledgement for the discarded RLC SDU, the corresponding UE (or transmission RLC entity of the UE) may consider that a positive acknowledgement is received for retransmission for the corresponding RLC SDU.

As another example, the discard status report may reuse the PDCP status report status report format. The corresponding indication information may be transmitted through a PDCP Status report having a value of PDU type 000. For example, the COUNT value of the first discarded PDCP SDU (or the first PDCP SDU of the first discarded PDU Set) may be included in the first missing COUNT (FMC) field indicating the COUNT value of the first lost PDCP SDU in the reordering window. As another example, bitmap field information for identifying whether the corresponding PDCP SDU is lost as 0 or 1 for one or more PDU SDUs may be included and transmitted. As another example, it may be transmitted, without the bitmap field (This field indicates which SDUs are missing and which SDUs are correctly received in the receiving PDCP entity.) or with the length of the bitmap field set to 0. As another example, it is possible to allocate a bitmap field of length in bits equal to the number of COUNTs from and not including the first discarded PDCP SDU up to and including the last discarded PDCP SDUs, rounded up to the next multiple of 8, or up to and including a PDCP SDU for which the resulting PDCP Control PDU size is equal to 9000 bytes, whichever comes first). The position of the Nth bit of the corresponding bitmap may be used to identify whether the Nth SDU is discarded in the first discarded SDU.

As another example, bitmap field information for identifying whether one PDU included in the corresponding PDU Set is lost as 0 or 1 for one or more PDU Set(s) may be included and transmitted.

As another example, it is possible to allocate a bitmap field of length in bits equal to the number of COUNTs from and not including the first discarded PDU Set up to and including the last discarded PDU Set, rounded up to the next multiple of 8, or up to and including a PDU Set for which the resulting PDCP Control PDU size is equal to 9000 bytes, whichever comes first). The position of the Nth bit of the corresponding bitmap may be used to identify whether one PDU included in the Nth PDU Set in the PDU Set having the first discarded SDU.

As another example, the discard status report may define a PDCP Control PDU (e.g., having one value among PDU type 100-111) distinguished from the PDCP status report having the PDU type 000 value, and transmit the corresponding indication information. For example, the corresponding PDCP Control PDU may include the field for indicating the COUNT/HFN/PDCP_SN value of the first discarded PDCP SDU. As another example, the corresponding PDCP Control PDU may include the field for indicating the COUNT/HFN/PDCP_SN value of the last discarded PDCP SDU. As another example, the PDCP Control PDU may include the field for indicating the total/whole number of discarded PDCP SDUs (or PDCP SDUs COUNTs) from the first discarded PDCP SDU to the last discarded PDCP SDU. As another example, the PDCP Control PDU may include the field for indicating the number of discarded PDCP SDUs (or PDCP SDUs COUNTs) from the first discarded PDCP SDU to the last discarded PDCP SDU but not including the same (e.g., total number of discarded PDCP SDUs-1). As another example, the corresponding PDCP Control PDU may include the field for indicating the COUNT/HFN/PDCP _SN value of the PDCP SDU included in the first discarded PDU Set. As another example, the corresponding PDCP Control PDU may include the field for indicating the COUNT/HFN/PDCP_SN value of the PDCP SDU included in the last discarded PDU Set. As an example, the corresponding PDCP Control PDU may include the field for indicating the number of PDCP SDUs included from the PDCP SDU included in the first discarded PDU Set to the PDCP SDU included in the last discarded PDU Set. As another example, bitmap field information for identifying whether the corresponding PDCP SDU is lost as 0 or 1 for one or more PDU SDUs may be included and transmitted. As another example, it may be transmitted without the bitmap field or with the length of the bitmap field set to 0. As another example, it is possible to allocate a bitmap field of length in bits equal to the number of COUNTs from and not including the first discarded PDCP SDU up to and including the last discarded PDCP SDUs, rounded up to the next multiple of 8, or up to and including a PDCP SDU for which the resulting PDCP Control PDU size is equal to 9000 bytes, whichever comes first). The position of the Nth bit of the corresponding bitmap may be used to identify whether the Nth SDU is discarded in the first discarded SDU.

As another example, bitmap field information for identifying whether one PDU included in the corresponding PDU Set is lost as 0 or 1 for one or more PDU Set(s) may be included and transmitted. As another example, it is possible to allocate a bitmap field of length in bits equal to the number of COUNTs from and not including the first discarded PDU Set up to and including the last discarded PDU Set, rounded up to the next multiple of 8, or up to and including a PDU Set for which the resulting PDCP Control PDU size is equal to 9000 bytes, whichever comes first). The position of the Nth bit of the corresponding bitmap may be used to identify whether one PDU included in the Nth PDU Set in the PDU Set having the first discarded SDU.

As another example, the discard status report may define the RLC Control PDU (e.g., CPT value 001 or 000) and transmit the corresponding indication information. As another example, the corresponding RLC Control PDU may include the field for indicating the sequence number (SN) value of the first discarded RLC (or RLC segment). As another example, the corresponding RLC Control PDU may include the field for indicating the SN value of the last discarded RLC SDUs (or RLC SDUs SNs). As another example, the RLC Control PDU may include the field for indicating the total/whole number of discarded RLC SDUs (or RLC SDUs SNs) from the first discarded RLC SDU (or corresponding RLC segment) to the last discarded RLC SDU (or corresponding RLC segment). As another example, the RLC Control PDU may include the field for indicating the number of discarded RLC SDUs (or RLC SDUs SNs) from the first discarded RLC SDU (or corresponding RLC segment) to the last discarded RLC SDU (or corresponding RLC segment) but not including the same (e.g., total number of discarded RLC SDUs-1). As another example, the corresponding RLC Control PDU may include the field for indicating the SN value of the RLC SDU (or corresponding RLC segment) included in the first discarded PDU Set. As another example, the corresponding RLC Control PDU may include the field for indicating the SN value of the RLC SDU (or corresponding RLC segment) included in the last discarded PDU Set. As an example, the corresponding RLC Control PDU may include the field for indicating the number of RLC SDUs included from the RLC SDU (or corresponding RLC segment) included in the first discarded PDU Set to the RLC SDU (or corresponding RLC segment) included in the last discarded PDU Set. As another example, bitmap field information for identifying whether the corresponding RLC SDU is lost as 0 or 1 for one or more RLC SDUs may be included and transmitted. As another example, it may be transmitted without the bitmap field or with the length of the bitmap field set to 0. As another example, it is possible to allocate a bitmap field of length in bits equal to the number of SNs from and not including the first discarded RLC SDU up to and including the last discarded RLC SDU, rounded up to the next multiple of 8, or up to and including a RLC SDU for which the resulting RLC Control PDU size is equal to bytes having a specific value, whichever comes first).

According to the embodiments described above, the UE may effectively discard PDUs associated with the PDU Set.

Hereinafter, configuration of a UE and a base station that perform the above-described embodiments will be described with the accompanying drawings.

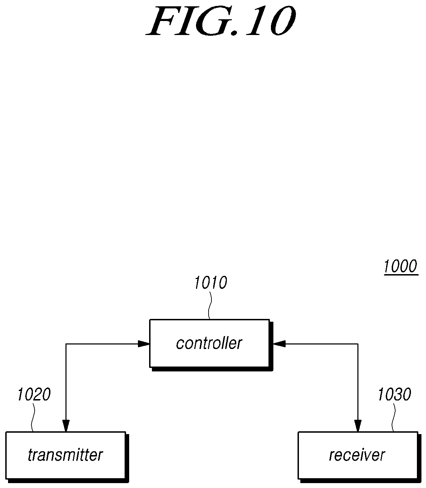

FIG. 10 is a block diagram illustrating a UE according to an embodiment.

Referring to FIG. 10, a UE 1000 may include a receiver 1030 configured to receive higher layer signaling including packet data convergence protocol (PDCP) configuration information for configuring to perform a protocol data unit (PDU) Set-based discard operation and receive a medium access control (MAC) control element indicating activation of a service data unit (SDU) discard operation based on PDU Set importance, and a controller 1010 configured to control a PDCP entity to start a PDU Set importance-based discard timer configured in association with the PDCP SDU when the SDU discard operation based on the PDU Set importance is activated, and a PDCP SDU belonging to the PDU Set importance of a preset criterion is received from a higher layer.

According to an embodiment, the receiver 1030 may receive PDCP configuration information through an RRC message. For example, the RRC message may be an RRC reconfiguration message. The receiver 1030 may receive PDCP configuration information through higher layer signaling periodically or according to the occurrence of a specific event.

According to an embodiment, the PDCP configuration information may include i) information for indicating (e.g., instructing, triggering,) to perform a PDU Set-based discard operation and ii) information about a timer for discarding based on the importance of PDU Set (e.g., PDU Set importance-based discard timer information).

According to an embodiment, the information for indicating to perform the PDU Set-based discard operation may be included as an information element of PDCP configuration information. For example, the information for indicating to perform the PDU Set-based discard operation may be included as a pdu-SetDiscard information element. If the corresponding information element is set to true, the controller 1010 may identify that the execution of the PDU Set-based discard operation is indicated for the corresponding PDCP entity. As another example, the PDU Set importance-based discard timer information may be included as an information element distinguished from the conventional PDCP discard timer information. The PDU Set importance-based discard timer information may be included as a discardTimerForLowImportance information element. For example, the PDU set importance-based discard timer information may include a timer value applied when the UE performs a service data unit (SDU) discard operation based on the PDU set importance.

Meanwhile, the PDU Set importance-based discard timer is indicated through an information element distinguished from the PDCP discard timer. The value of the PDU Set importance-based discard timer may be set to any value that is equal to or greater than 0 and less than the value of the PDCP discard timer. For example, the value of the PDU Set importance-based discard timer may be set to 0. The value of the PDCP discard timer may not be set to 0. Additionally, the value of the PDU Set importance-based discard timer is set to a value smaller than the value of the PDCP discard timer. Since these values of the timer are set in units of time, a small value represents a shorter duration.

The SDU discard operation based on the PDU Set importance is deactivated after receiving the RRC reconfiguration message. For example, when the RRC reconfiguration message is received, the controller 1010 may configure the SDU discard operation based on the PDU Set importance to be in an inactive state. Specifically, when receiving a reconfiguration message (e.g., reconfigurationwithsync) including a handover command according to the movement of the UE, it may be considered that the SDU discard operation function based on the PDU Set importance is disabled/deactivated.

The receiver 1020 may receive the MAC CE to be instructed to switch to the active state for the service data unit (SDU) discard operation based on the PDU Set importance of the inactive state. Alternatively, the receiver 1020 may receive the MAC CE to be instructed to switch to the inactive state for the service data unit (SDU) discard operation based on the PDU Set importance of the active state.

According to an embodiment, the MAC control element may include a field for indicating activation or deactivation of the SDU discard operation based on PDU Set importance. The MAC control element may indicate activation or deactivation of the SDU discard operation based on the PDU Set importance for each DRB.

The MAC control element for indicating activation or deactivation of the SDU discard operation based on the PDU Set importance may be a newly defined MAC control element rather than a typical MAC control element.

Meanwhile, the controller 1010 may receive the MAC control element to activate or deactivate the SDU discard operation based on the PDU Set importance through the receiver 1030. When the SDU discard operation based on the PDU Set importance is activated, the controller 1010 may identify the PDU Set importance for the PDCP SDU transferred from the higher layer. If the PDCP SDU belongs to a low PDU Set importance, a PDU Set importance-based discard timer configured in association with the PDCP SDU may be started.

According to an embodiment, PDU Set importance may be divided according to a preset criterion. As an example, the PDU Set importance may be divided into two steps: high and low. As another example, PDU Set importance may be divided into N levels. As further another example, PDU Set importance may be set in various ways, and there is no limitation thereto.

When the PDCP SDU belonging to the low PDU Set importance is received, the PDCP entity starts by associating the PDU Set importance-based discard timer rather than the PDCP discard timer. In other words, the UE may divide and apply a timer for discarding the PDU according to PDU Set importance information.

According to an embodiment, the controller 1010 may, when the PDU Set importance-based discard timer expires, control the PDCP entity to discard all PDCP SDUs included in the PDU Set to which the PDCP SDU belongs, together with the PDCP data PDU. For example, the PDCP entity may start a PDU Set importance-based discard timer in association with the PDCP SDU belonging to the low PDU Set importance, and when the PDU Set importance-based discard timer expires, the PDCP entity may discard all of the PDCP SDUs included in the PDU Set to which the PDCP SDU belongs.

According to another embodiment, the controller 1010 may, when the PDCP entity receives the PDCP SDU to be included in the PDU Set to which the PDCP SDU belongs from the higher layer, the PDCP entity may control to discard the received PDCP SDU as well. For example, the PDCP entity may discard all of the PDCP SDUs of the PDU Set to which the PDCP SDU belongs as the PDU Set importance-based discard timer expires and may also discard PDCP SDUs that are divided and received (successively) from the higher layer to be included in the corresponding PDU Set.

According to another embodiment, the controller 1010 may, when the SDU discard operation based on the PDU Set importance is in an inactive state or the PDU Set importance-based discard timer is not configured, control to initiate the PDCP discard timer associated with the PDCP SDU. For example, when the PDU Set importance-based discard timer is configured in the UE and the SDU discard operation based on PDU Set importance is activated, the UE starts the PDU Set importance-based discard timer for the PDCP SDU. As another example, when the SDU discard operation based on the PDU Set importance is deactivated, the UE starts the conventional PDCP discard timer in association with the PDCP SDU. As further another example, even when the PDU Set importance-based discard timer is not configured in the UE even when the PDU Set importance-based discard operation is activated, the UE starts the conventional PDCP discard timer in association with the PDCP SDU.

Besides, the controller 1010 controls the overall operation of the UE 1000 according to the data processing operation necessary to perform the above-described embodiments.

The transmitter 1020 and the receiver 1030 are used to transmit or receive signals or messages or data necessary for performing the above-described embodiments, with the base station.

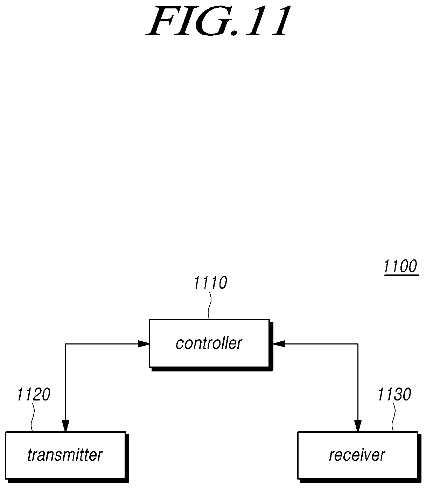

FIG. 11 is a block diagram illustrating a base station according to an embodiment.

Referring to FIG. 11, a base station 1100 controlling UE to process data may include a controller 1110 configured to configure PDCP configuration information for configuring to perform a PDU Set-based discard operation and a transmitter 1120 configured to transmit higher layer signaling including the PDCP configuration information to a UE and transmit a MAC control element indicating activation of an SDU discard operation based on a PDU Set importance to the UE. The UE may start a PDU Set importance-based discard timer configured in association with the PDCP SDU in the PDCP entity if the PDU Set importance-based SDU discard operation is activated, and the PDCP SDU belonging to the PDU Set importance of a preset criterion is received from the higher layer.

According to an embodiment, the PDCP configuration information may include i) information for indicating to perform a PDU Set-based discard operation and ii) PDU Set importance-based discard timer information.

According to an embodiment, the information for indicating to perform the PDU Set-based discard operation may be included as an information element of PDCP configuration information. For example, the information for indicating to perform the PDU Set-based discard operation may be included as a pdu-SetDiscard information element. If the corresponding information element is set to true, the UE may identify that the execution of the PDU Set-based discard operation is indicated for the corresponding PDCP entity. As another example, the PDU Set importance-based discard timer information may be included as an information element distinguished from the conventional PDCP discard timer information. The PDU Set importance-based discard timer information may be included as a discardTimerForLowImportance information element. For example, the PDU set importance-based discard timer information may include a timer value applied when the UE performs a service data unit (SDU) discard operation based on the PDU set importance.

According to an embodiment, the PDU Set importance-based discard timer is indicated through an information element distinguished from the PDCP discard timer. The value of the PDU Set importance-based discard timer may be set to any value that is equal to or greater than 0 and less than that of the PDCP discard timer. For example, the value of the PDU Set importance-based discard timer may be set to 0. The value of the PDCP discard timer may not be set to 0. Further, the value of the PDU Set importance-based discard timer is set to a value smaller than the value of the PDCP discard timer. Since the value of the timer is set in units of time, a small value means a value representing a short time.

The transmitter 1120 may transmit PDCP configuration information through an RRC message. For example, the RRC message may be an RRC reconfiguration message. The transmitter 1120 may transmit, to the UE, PDCP configuration information through higher layer signaling periodically or according to the occurrence of a specific event.

The transmitter 1120 may transmit the MAC CE to instruct to switch to the active state for the service data unit (SDU) discard operation based on the PDU Set importance of the inactive state. Alternatively, the transmitter 1120 may receive the MAC CE to instruct to switcha to the inactive state for the service data unit (SDU) discard operation based on the PDU Set importance of the active state.

For example, the MAC control element (CE) may include a field for indicating activation or deactivation of the SDU discard operation based on PDU Set importance. The MAC control element may indicate activation or deactivation of the SDU discard operation based on the PDU Set importance for each DRB.

The MAC control element for indicating activation or deactivation of the SDU discard operation based on the PDU Set importance may be a newly defined MAC control element rather than a conventional MAC control element.

The SDU discard operation based on the PDU Set importance is deactivated after receiving the RRC reconfiguration message. For example, when the RRC reconfiguration message is received, the UE may configure the SDU discard operation based on the PDU Set importance to be in an inactive state. Specifically, when receiving a reconfiguration message (e.g., reconfigurationwithsync) including a handover command according to the movement of the UE, it may be considered that the SDU discard operation function based on the PDU Set importance is disabled/deactivated.

According to an embodiment, the UE may receive the MAC control element to activate or deactivate the SDU discard operation based on the PDU Set importance. When the SDU discard operation based on the PDU Set importance is activated, the UE may identify the PDU Set importance for the PDCP SDU transferred from the higher layer. If the PDCP SDU belongs to a low PDU Set importance, a PDU Set importance-based discard timer configured in association with the PDCP SDU may be started.

According to an embodiment, PDU Set importance may be divided according to a preset criterion. As an example, the PDU Set importance may be divided into two steps: high and low. As another example, PDU Set importance may be divided into N levels. As further another example, PDU Set importance may be set in various ways, and there is no limitation thereto.

When the PDCP SDU belonging to the low PDU Set importance is received, the PDCP entity starts by associating the PDU Set importance-based discard timer rather than the PDCP discard timer. In other words, the UE may divide and apply a timer for discarding the PDU according to PDU Set importance information.

According to an embodiment, the UE may, when the PDU Set importance-based discard timer expires, control the PDCP entity to discard all PDCP SDUs included in the PDU Set to which the PDCP SDU belongs, together with the PDCP data PDU. For example, the PDCP entity of the UE may start a PDU Set importance-based discard timer in association with the PDCP SDU belonging to the low PDU Set importance, and when the PDU Set importance-based discard timer expires, the PDCP entity may discard all of the PDCP SDUs included in the PDU Set to which the PDCP SDU belongs.

According to another embodiment, the UE may, when the PDCP entity receives the PDCP SDU to be included in the PDU Set to which the PDCP SDU belongs from the higher layer, the PDCP entity may control to discard the received PDCP SDU as well. For example, the PDCP entity may discard all of the PDCP SDUs of the PDU Set to which the PDCP SDU belongs as the PDU Set importance-based discard timer expires and may also discard PDCP SDUs that are divided and received (successively) from the higher layer to be included in the corresponding PDU Set.

According to further another embodiment, the UE may, when the SDU discard operation based on the PDU Set importance is in an inactive state or the PDU Set importance-based discard timer is not configured, initiate the PDCP discard timer associated with the PDCP SDU. For example, when the PDU Set importance-based discard timer is configured in the UE and the SDU discard operation based on PDU Set importance is activated, the UE starts the PDU Set importance-based discard timer for the PDCP SDU. As another example, when the SDU discard operation based on the PDU Set importance is deactivated, the UE starts the conventional PDCP discard timer in association with the PDCP SDU. As further another example, even when the PDU Set importance-based discard timer is not configured in the UE even when the PDU Set importance-based discard operation is activated, the UE starts the conventional PDCP discard timer in association with the PDCP SDU.

Besides, the controller 1110 controls the overall operation of the base station 1100 according to the data processing operation necessary to perform the above-described embodiments.

The transmitter 1120 and the receiver 1130 are used to transmit or receive signals or messages or data necessary for performing the above-described embodiments, with the UE.

The embodiments described above may be supported by the standard documents disclosed in at least one of the radio access systems such as IEEE 802, 3GPP, and 3GPP2. That is, the steps, configurations, and parts, which have not been described in the present embodiments, may be supported by the above-mentioned standard documents for clarifying the technical concept of the disclosure. In addition, all terms disclosed herein may be described by the standard documents set forth above.

The above-described embodiments may be implemented by any of various means. For example, the present embodiments may be implemented as hardware, firmware, software, or a combination thereof.

In the case of implementation by hardware, the method according to the present embodiments may be implemented as at least one of an application specific integrated circuit (ASIC), a digital signal processor (DSP), a digital signal processing device (DSPD), a programmable logic device (PLD), a field programmable gate array (FPGA), a processor, a controller, a microcontroller, or a microprocessor.

In the case of implementation by firmware or software, the method according to the present embodiments may be implemented in the form of an apparatus, a procedure, or a function for performing the functions or operations described above. Software code may be stored in a memory unit, and may be driven by the processor. The memory unit may be provided inside or outside the processor, and may exchange data with the processor by any of various well-known means.

In addition, the terms "system", "processor", "controller", "component", "module", "interface", "model", "unit", and the like may generally mean computer-related entity hardware, a combination of hardware and software, software, or running software. For example, the above-described components may be, but are not limited to, a process driven by a processor, a processor, a controller, a control processor, an entity, an execution thread, a program and/or a computer. For example, both the application that is running in a controller or a processor and the controller or the processor may be components. One or more components may be provided in a process and/or an execution thread, and the components may be provided in a single device (e.g., a system, a computing device, etc.), or may be distributed over two or more devices.

The above embodiments of the disclosure have been described only for illustrative purposes, and those skilled in the art will appreciate that various modifications and changes may be made thereto without departing from the scope and spirit of the disclosure. Further, the embodiments of the disclosure are not intended to limit, but are intended to illustrate the technical idea of the disclosure, and therefore the scope of the technical idea of the disclosure is not limited by these embodiments. The scope of the disclosure shall be construed on the basis of the accompanying claims in such a manner that all of the technical ideas included within the scope equivalent to the claims belong to the disclosure.

## Claims

1. A method for processing data by a user equipment (UE), the method comprising:
receiving higher layer signaling including packet data convergence protocol (PDCP) configuration information for performing a protocol data unit (PDU) Set-based discard operation;
receiving a medium access control (MAC) control element that indicates activation of a service data unit (SDU) discard operation based on PDU Set importance; and
controlling a PDCP entity to start a PDU Set importance-based discard timer when the SDU discard operation based on the PDU Set importance is activated and when a PDCP SDU belonging to the PDU Set importance of a preset criterion is received from a higher layer, where the PDU Set importance-based discard timer is configured in association with the PDCP SDU.

2. The method of claim 1, wherein the PDCP configuration information includes information for instructing to perform the PDU Set-based discard operation and information about the PDU Set importance-based discard timer.

3. The method of claim 1, wherein:
the PDU Set importance-based discard timer is indicated through an information element distinguished from a PDCP discard timer; and
a value of the PDU Set importance-based discard timer is set to a value that is equal to or greater than 0 and less than a value of the PDCP discard timer.

4. The method of claim 1, wherein the SDU discard operation based on the PDU Set importance is deactivated after receiving an RRC reconfiguration message.

5. The method of claim 1, wherein the MAC control element includes a field for indicating activation or deactivation of the SDU discard operation based on the PDU Set importance.

6. The method of claim 1, wherein the controlling includes controlling the PDCP entity to discard all PDCP SDUs included in a PDU Set where the PDCP SDU belongs, together with a PDCP data PDU when the PDU Set importance-based discard timer expires.

7. The method of claim 6, wherein the controlling includes, when receiving a PDCP SDU to be included in the PDU Set where the PDCP SDU belongs from the higher layer, controlling the PDCP entity to discard the received PDCP SDU.

8. The method of claim 1, wherein the controlling includes controlling to initiate a PDCP discard timer associated with a corresponding PDCP SDU when the SDU discard operation based on the PDU Set importance is in an inactive state or when the PDU Set importance-based discard timer is not configured.

9. A method for controlling UE to process data by a base station, the method comprising:
configuring packet data convergence protocol (PDCP) configuration information for performing a protocol data unit (PDU) Set-based discard operation;
transmitting higher layer signaling including the PDCP configuration information to a user equipment (UE); and
transmitting a medium access control (MAC) control element that indicates activation of a service data unit (SDU) discard operation based on a PDU Set importance to the UE,
wherein when the SDU discard operation based on the PDU Set importance is activated and when a PDCP SDU belonging to the PDU Set importance of a preset criterion is received from a higher layer, the UE starts a PDU Set importance-based discard timer configured in connection with the PDCP SDU in a PDCP entity.

10. The method of claim 9, wherein the PDCP configuration information includes information for instructing to perform the PDU Set-based discard operation and information about the PDU Set importance-based discard timer.

11. The method of claim 9, wherein:
the PDU Set importance-based discard timer is indicated through an information element distinguished from a PDCP discard timer, and
a value of the PDU Set importance-based discard timer is set to a value that is equal to or greater than 0 and less than a value of the PDCP discard timer.

12. The method of claim 9, wherein the MAC control element includes a field for indicating activation or deactivation of the SDU discard operation based on the PDU Set importance.

13. A user equipment (UE) for processing data, comprising:
a receiver configured to receive higher layer signaling including packet data convergence protocol (PDCP) configuration information for configuring to perform a protocol data unit (PDU) Set-based discard operation and receiving a medium access control (MAC) control element indicating activation of a service data unit (SDU) discard operation based on PDU Set importance; and
a controller configured to control a PDCP entity to start a PDU Set importance-based discard timer when the SDU discard operation based on the PDU Set importance is activated and when a PDCP SDU belonging to the PDU Set importance of a preset criterion is received from a higher layer, where the PDU Set importance-based discard timer is configured in associated with the PDCP SDU.

14. The UE of claim 13, wherein the PDCP configuration information includes information for instructing to perform the PDU Set-based discard operation and information about the PDU Set importance-based discard timer.

15. The UE of claim 13, wherein:
the PDU Set importance-based discard timer is indicated through an information element distinguished from a PDCP discard timer, and
a value of the PDU Set importance-based discard timer is set to a value that is equal to or greater than 0 and less than a value of the PDCP discard timer.
